# EUROPEAN PATENT SPECIFICATION

(11) **EP 4 053 223 B1**
(45) Date of publication and mention of the grant of the patent: **14.05.2025**
(21) Application number: 21160554.8
(22) Date of filing: 03.03.2021
(51) Int. Cl.: C09D 5/00

(54) **COMPOSITIONS FOR USE IN OPTICAL MEASUREMENT TECHNOLOGY APPLICATIONS**
ZUSAMMENSETZUNGEN ZUR VERWENDUNG IN ANWENDUNGEN MIT OPTISCHER MESSTECHNIK
COMPOSITIONS POUR UNE UTILISATION DANS DES APPLICATIONS DE TECHNOLOGIE DE MESURE OPTIQUE

(43) Date of publication of application: 07.09.2022
(73) Proprietor: F2MB-Engineering UG (haftungsbeschränkt), 44225 Dortmund (DE)
(72) Inventor: Schlott, Friedrich August, 45657 Recklinghausen (DE); Liese, Max Bruno, 51427 Bergisch Gladbach (DE)
(74) Representative: dompatent von Kreisler Selting Werner - Partnerschaft von Patent- und Rechtsanwälten mbB

(56) References cited:
- DE-A1- 102017 005 172
- DE-U1- 202019 101 101
- DE-U1- 202019 104 992

## Description

### Field of the Invention

The present invention relates to compositions comprising one or more substituted diamondoids and a solvent which are suitable for use in, *inter alia,* optical measurement technology and, in particular, 3D scanning and photogrammetry technology as well as methods of preparing and using said compositions.

### Background

The quality of an optical measurement is largely determined by the light properties of the surfaces of the objects to be measured. Frequently, a diffuse light reflection on the outer boundary surfaces of the measurement object is desired. In the case that the surface of the object to be measured is partly or completely transparent, translucent, absorbing, reflective, glossy, or black most currently available measurement devices struggle to produce a measurement/scan of sufficiently high quality and accuracy. Attempts to compensate for these deficiencies by, for example, adapting the light source, sensor and optical image to the properties of the object often prove ineffective or insufficient in providing optimal imaging of the desired quality. Furthermore, measuring and positioning strategies designed to avoid erroneous measurements or to reduce artefacts not only require expert knowledge, but are often also time-consuming and technically demanding.

In order to prepare surfaces for an optical measurement, such as a 3D scan measurement, which would otherwise be either incapable of being measured or difficult to accurately measure, one approach known in the art is to apply an antireflective coating to the surface to be measured, thus rendering said surface opaque or matt. In order that an optimal surface for scanning and thus minimal measurement errors during the scan be obtained, it is important that a coating layer of minimal yet homogenous thickness be applied.

One such approach sees the application to the surface to be measured/scanned of pigment-containing agents, in particular whitening agents based on inorganic pigments such as, for example, titanium dioxide, chalk or barium sulfate. Such coatings endure on the surface to which they are applied. However, this method of preparing matt, opaque surfaces is only suitable where no restrictions exist in terms of the purity or cleanliness of either the object to be coated/measured or the area or room in which the coating/measurement is to be performed as the released pigments lead to the contamination of the systems, devices (including the scanning equipment, e.g. 3D scanner, itself), areas and laboratories in which they are employed. Furthermore, recent studies have identified the released pigment particles such as TiO₂ as being a potential health risk due to the susceptibility of the airborne particles to being inhaled into the lung tissue where they may reside and trigger severe health problems including lung cancer.

A further issue with the employment of such pigment-based coatings lies in the fact that, in order to retrieve the measured/scanned object in its original condition, the deposited antireflective layer must be removed again post-measurement. This poses a particular problem where the object to be measured is not of trivial value and/or its simple disposal post-measurement is not desired. In cases in which the coating has been applied to large, extended surfaces, ensuring a thorough removal of the coating layer is complicated and not always satisfactory, as residual coating material generally remains on the surface. In respect of sensitive and/or fragile objects such as, for example, structural components from the field of precision engineering and, in particular, such components which exhibit micro-cavities or an open-porous structure, application of such pigment-based coating layers inevitably leads to irreversible contamination or abrasions on the surface upon attempted removal of the coating. Typical procedures used for the removal of pigment-based coatings from the scanned object also involve the use of chemical cleaning agents whose use is often undesirable or even incompatible with the coated object. Accordingly, such cleaning processes are, even where successful, often extremely elaborate and time-consuming, thus rendering them technically or economically unattractive. A further disadvantage often associated with the use of such pigment-based coatings is that relatively thick coating layers of high granularity can result. In turn, such properties can give rise to significant errors, distortions and irregularities in the results of measurements employing optical micromeasurement and scanning technology. In order to provide optimal measurement results of high precision, it is therefore preferable that thin antireflective coating layers of low granularity be applied to the surface to be measured. As alluded to above, a further unavoidable issue, if pigment-based coatings are used, is the contamination of the equipment which is used for the scanning process. Scanner equipment, such as lenses, cooling fans, filters, etc. are contaminated by the pigments and therefore need to be cleaned or even replaced on a regular basis.

Objects which are subjected to optical measurements using techniques such as 3D scanning are often component parts of other products including mechanical products. As such, the objects to be scanned are often protected from the environment by the presence of, for example, an oil or lubricant coating layer such to, for example, inhibit corrosion. The provision of a suitable antireflective coating layer on such an object is often impossible when using pigment-based agents as the pigments interact with the oil or lubricant on the surface of the object, thus forming an uneven surface or even clumps of pigment/oil. This has not only the disadvantage of not forming a coating which allows the object to be scanned but also of removing the protective oil/lubricant layer from the object, thus leaving it undesirably exposed to the environment. The cleaning of the object and reapplication of the protective oil/lubricant layer on the part of the party carrying out, for example, the 3D scanning operation such to minimise the time of exposure to the environment may also be undesirable for the manufacturer of said object, in particular where the object is of high value, fragility etc.

In order to be able to conduct an optical measurement such as a 3D scan measurement, a series of adhesive dots or spots must generally first be applied to the surface of the object to be scanned. These dots or spots act as reference points for the scanner which aid it in establishing an accurate replication of the measured surface. Should an insufficient quantity of reference dots or spots have been employed, additional dots or spots must be applied to the surface to be scanned such to provide the scanner with sufficient reference points to be able to produce a high-quality scan. In this regard, one further disadvantage of pigment-based sprays is that the surface is generally sprayed subsequent to the application of the reference dots or spots. If it is then ascertained that an insufficient number of reference dots has been applied in order to establish the desired scan quality, the application of additional dots or spots must be performed on top of the pigment coating. This, in turn, is problematic as it necessitates the handling of the sprayed object during which the pigments are easily removed from the surface upon touch. In fact, that such pigment coatings are so susceptible to undesired removal/smearing/smudging from/on the surface (marring) to be scanned upon even gentle contact poses a more general problem as the object to be scanned must often be turned or manoeuvred by hand in order to enable a full scan of the surface. As such, the provision of a product with the ability to form a coating on a surface to be scanned which is robust enough to withstand being touched and handled without negatively affecting the quality of the scannable surface (or at least not to the extent that a scan of sufficiently high quality can no longer be produced; also referred to as "mar resistance") would be of major benefit to the field. Furthermore, the provision of such a product which exhibits the versatility to allow the adhesive dots or spots required by the scanner to be applied subsequent to formation of the coating on the object to be scanned and to be removed and potentially subsequently reapplied without substantially detrimentally affecting either the coated surface or the adhesiveness of said dots or spots (thus allowing their re-use) would likewise constitute an advantage over known prior art solutions.

In view of the foregoing, an ideal composition used to apply an antireflective coating on an object for optical measurement applications such as those mentioned above would be free of pigments such as TiO₂ yet still, upon application to the surface of the object, give rise to a coating layer that is able to improve the scannability of the object by enabling the uniform, diffuse reflection of light in all directions whilst, at the same time, possessing excellent surface smoothness and surface homogeneity, a very low thickness, and excellent mar resistance. The composition would ideally have the ability to form a high quality coating on an oiled surface. In addition, said antireflective coating formed from this composition should not adversely affect the adhesion of the aforementioned dots on an object to be scanned and should allow the removal and reapplication of these dots on said object without tarnishing the surface of the coating. Of particular advantage would also be that the antireflective coating furnishes the scanned object post-measurement in its original, uncoated state without the need for the user to have to undertake actions such as cleaning or wiping of the surface to effect its removal. Lastly, from the standpoint of the consumer/end-user and the environment, said antireflective coating would be either odourless or not of unpleasant smell (and ideally be of pleasant smell) and should comprise as few hazardous chemical compounds as possible (for instance, the safety data sheets according to, for example, Regulation (EC) No. 1907/2006 of the respective chemical components present in the material employed to furnish the surface coating should report as few environmental and health hazards/risks and as few Global Harmonized System (GHS) of Classification and Labelling of Chemicals warnings as possible). One additional desired property would be for the formed coating to be employable directly (or with minimal manipulation and effort) by the end user in all imaginable/required situations without the need to employ any specially designed apparatus or equipment, thus allowing, *inter alia,* application of the coating layers in the field ("*in situ*") and not only in specially constructed or equipped laboratories or areas. In light of this, it would be further advantageous were the coating layer to withstand normal and even extreme weather conditions such as, for example, direct impact with water, strong winds, UV radiation and other conditions associated with working outdoors.

It is thus an object underlying the present invention to provide a composition from which a coating may be formed on the surface of an object which fulfils one or more and, more preferably, as many as possible of the properties associated with the ideal antireflective coating and corresponding composition outlined above.

Means of overcoming primarily the above-outlined disadvantage of post-measurement coating removal associated with such a pigment-based-coating approach have been sought in the art. To this end, coating materials which are volatile at room temperature or slightly above room temperature have been investigated. Due to their volatility, such agents evaporate or sublime from the coated surface within a relatively short period of time, thus leaving the surface residue-free without the need for the coating layer to be actively removed by means of cleaning, scrubbing, wiping, washing, etc.

One such means known in the art for forming such a coating layer has its roots in the field of archaeology and restoration and involves the application of cyclododecane (often abbreviated to CCD or CDD) to the surface to be scanned by first providing a solution of CCD in a pressurised (and thus liquefied) propellant gas in a spray can and spraying the solution onto the surface to be measured (such a product is, for example, available under the trade name "Cyclodecan Spray" from Deffner & Johann GmbH, Germany). Whilst this method addresses some of the aforementioned disadvantages associated with pigment-based sprays by giving rise to a sublimable coating layer, it suffers from the disadvantage that pronounced CCD crystal formation during application results in coarse, highly granular coating layers exhibiting irregular layer thickness and needle-like crystals. Such layers are not suitable for performing precise, high-resolution optical scans/measurements as unrectifiable measurement errors result. Such sprays also contain high concentrations of CCD, this being potentially disadvantageous from a cost perspective. Furthermore, such CCD sprays produce coating layers which easily smear or smudge (mar) upon handling and onto which the reference dots or spots required by the scanner in order to produce reliable, high-quality scans at best only very poorly adhere. Removal of the adhesive dots or spots from such a CCD-sprayed surface is generally seen to detrimentally affect the quality of the coating layer and the adhesive dots or spots are generally unable to be re-used. Antireflection products based exclusively on CCD also often have the disadvantage of bearing an odour or fragrance which may be considered unpleasant by the end user.

In view of the disadvantages associated with such known compositions based on CCD, improved compositions for furnishing a desirable coating layer for such optical measurement applications were developed by the present inventors as disclosed in WO 2020/089481 (PCT/EP2019/080073). These compositions improve upon the above-described prior art compositions based on CCD and relate to compositions comprising adamantane and a solvent which is a hydrocarbon (or a mixture of hydrocarbons) with a boiling point (or boiling point range) of 25 °C (or more). Coatings produced from such compositions employing adamantane as the sublimable component exhibit excellent properties in respect of, for example, resistance to marring, dot adhesion, resistance to impairment upon dot removal, re-adhesion of dots following removal, durability against running water, ability to produce a high quality optical measurement when said coating is formed on an oiled surface (including sublimation post-optical-measurement to leave the underlying oil layer intact). Relative to coatings produced from the previously known prior art solutions, these coatings also exhibit attractive properties in terms of, for example, surface homogeneity and coating thickness. Coatings produced from such compositions employing adamantane as the sublimable component are seen, however, to exhibit relatively short residence times.

DE202019104992 U1 discloses a matting component comprising at least one first cycloalkane selected from the group of C8 diols and/ or C8 diketones and at least one second cycloalkane selected from the group of diamondoids and/or diamondoid derivatives.

DE202019101101 U1 discloses a sprayable composition for reversible surface coating comprising at least one cycloalkane selected from the group of diamondoids and/ or diamondoid derivatives.

DE102017005172 A1 discloses a means for the reversible modification of optically incompatible object surfaces for temporary matting, sealing and preservation for metrological examinations.

It would thus be of great interest to the field (and thus it constitutes an object underlying the present invention) to be able to provide compositions that produce coatings exhibiting one or more (preferably as many as possible) of the attractive properties associated with coatings produced from compositions in which adamantane is the sublimable component but which exhibit a prolonged residence time (for instance, one or more hours, several hours or even 24 hours or longer) time relative to said adamantane coatings. In particular, it would be of great interest to provide compositions which give rise to coatings in which the excellent properties of adamantane coatings in terms of resistance to marring, dot adhesion, resistance to impairment upon dot removal, re-adhesion of dots following removal, durability against running water, and/or ability to produce a high quality optical measurement when said coating is formed on an oiled surface (including sublimation post-optical-measurement to leave the underlying oil layer intact) are also realised but which simultaneously exhibit prolonged residence times relative to the corresponding adamantane coatings. It would additionally be of great interest if compositions could be provided which give rise to coatings exhibiting outstanding surface properties such as surface smoothness and/or homogeneity, especially of a similar quality to those seen for corresponding adamantane coatings. Were such coatings able to improve on one or more of the corresponding surface properties seen for adamantane coatings, this would be additionally advantageous. As outlined above, coatings applied to surfaces for subsequent optical measurement should exhibit very low thickness such to enable high quality optical scan measurements to be conducted. Accordingly, the compositions should also give rise to coatings of very low thickness, ideally as low or even lower than that seen for adamantane coatings. To furnish such thin coatings that nonetheless exhibit prolonged residence times and are capable of enabling high quality optical measurements such as 3D scans of the object to which they have been applied is particularly challenging and would thus constitute an important contribution to the art. Whilst achieving these objects, the compositions should also ideally be of pleasant odour, preferably of improved odour relative to adamantane coatings or coatings based on other prior art compositions.

The compositions of the present invention should ideally, analogous to their use in furnishing surfaces for measurement by 3D scanning, also be able to be employed to furnish surfaces for measurement using other optical measurement technologies such as photogrammetry or LIDAR (Light Detection and Ranging or Light Imaging, Detection and Ranging). The optical measurement technique of photogrammetry uses photographic images captured with a camera (for instance, a smart phone camera) to obtain reliable data from physical objects which are the subject of said photographs (in particular relating to their surface structure and topography). Photogrammetry is commonly employed, for example, by surveyors, architects and engineers to create topographic maps, meshes, points of clouds or drawings based on physical objects. Photogrammetry can provide an alternative measurement technique to 3D scanning for furnishing a 3D map, picture or model of an object or surface. Photogrammetry may be preferred in certain contexts to 3D scanning as it is, generally, more accessible and affordable due to the measurement device required being a (simple) camera. Photogrammetry may also be advantageous over and thus preferable to 3D scanning when measuring larger objects such as, for example, buildings (or parts of buildings) which would, often, require a 3D scanner to be adapted for those specific applications. The issues concerning the light properties of the surfaces of the objects to be measured outlined above within the context of 3D scanning also exist in the context of optical measurement of surfaces by way of photogrammetry. LIDAR exhibits many of the same advantages as photogrammetry over 3D scanning and LIDAR images may be captured using laser light, measuring the time the reflection of the emitted laser light needs to return to the sensor. Such sensors are used in combination with cameras such as, for example, a camera on a smartphone or tablet. Accordingly, a further object underlying the present invention is the provision of a product capable of overcoming any one and preferably more than one of the above-mentioned disadvantages associated with prior art solutions (in particular coatings employing adamantane as the sublimable component) to providing (antireflective) surfaces suitable for optical measurement (and discussed above within the context of 3D scanning), wherein the optical measurement is performed by means of photogrammetry or LIDAR.

### Summary of the Invention

In light of the foregoing, the present invention is as defined in the appended claims.

### Brief Description of the Figures

Figures 1 to 5 depict the progress over time of the sublimation of a coating formed using a composition according to the present invention (Example 1) in comparison to a coating formed using a prior art composition (Comparative Example 1).
Figure 6 shows the surface of the coating layer formed upon application to a sheet of polished stainless steel of the composition of Example 1.
Figure 7 shows the surface of the coating layer formed upon application to a sheet of polished stainless steel of the composition of Example 2.
Figure 8 shows the surface of the coating layer formed upon application to a sheet of polished stainless steel of the composition of Example 3.
Figure 9 shows the surface of the coating layer formed upon application to a sheet of polished stainless steel of the composition of Comparative Example 1.
Figure 10 shows the surface of the coating layer formed upon application to a sheet of polished stainless steel of the composition of Comparative Example 2.
Figure 11 shows the surface of the coating layer formed upon application to a sheet of polished stainless steel of the composition of Comparative Example 3.
Figure 12 shows the thickness profile along a defined path of the coating layer formed upon application to a sheet of polished stainless steel of the composition of Example 1.
Figure 13 shows the thickness profile along a defined path of the coating layer formed upon application to a sheet of polished stainless steel of the composition of Example 2.
Figure 14 shows the thickness profile along a defined path of the coating layer formed upon application to a sheet of polished stainless steel of the composition of Example 3.

### Detailed Description of the Invention

The compositions of the present invention serve to realise one or more of the above-outlined objects.

As demonstrated through the experimental data in the present application, a direct comparison of the compositions of the invention with prior art alternatives which employ sublimable coatings in optical measurement applications (e.g. 3D scanning applications) shows that the compositions of the present invention give rise to coatings with prolonged (medium or long) residence times whilst simultaneously exhibiting excellent additional properties in terms of coating thinness, surface homogeneity, surface smoothness, mar resistance, adhesion of reference dots, non-impairment of dot removal, re-adhesion of dots, coating formation on oiled surfaces, coating durability against running water, and odour. As such, the coatings generated from the compositions of the invention furnish, for the first time, extremely thin coatings that allow precise, high quality, high resolution optical measurements (e.g. 3D scans) of surfaces and objects to which such a sublimable composition has been applied whilst providing the operator with ample time to conduct, for example, a multitude of measurements without the need for reapplying a new coating. In view of the prolonged residence times that are achievable using the compositions of the present invention, said compositions are also particularly useful in the application of coatings to areas of objects to be optically measured that are highly exposed to air. Such areas (for example, fins, edges, or other areas of objects highly exposed to air) are more susceptible to quick sublimation than the central areas of a coating and may thus have a shorter window within which the optical measurement must be performed before the coating has sublimed to such a degree that the quality of the optical measurement is impaired.

That the compositions disclosed herein exhibit any one of these advantages serves to provide a valuable contribution to the art. That, as demonstrated herein, an excellent balance of such a wide range of properties is realised makes the contribution of the compositions of the present invention all the more valuable, in particular whilst, at the same time, allowing the residence time of the coating to be increased.

In this regard, the present invention relates to a composition comprising
(i) one or more substituted diamondoids;
   and
(ii) a solvent A
   and/or
(iii) a solvent B;
wherein said (i) one or more substituted diamondoids comprises one or more ketones of adamantane.

As such, the present invention relates to a composition comprising one or more substituted diamondoids as defined in the claims and a solvent A and/or a solvent B, i.e. in addition to the one or more substituted diamondoids (an essential feature of the compositions of the invention), the composition may comprise a solvent A, a solvent B or a combination of said solvent A and said solvent B. Within the context of the present invention, solvent A and solvent B are different from one another.

It has been discovered by the present inventors that one or more of the above-outlined problems can be overcome using a solution comprising one or more substituted diamondoids as defined in the claims in a solvent A, a solvent B or mixture of a solvent A and a solvent B as defined in the claims.

The compositions of the present invention may be and are preferably solutions. Where the compositions of the invention are solutions, said one or more substituted diamondoids and any further additives present (such as the one or more additives described hereinbelow) may be in solution in solvent A, solvent B or a mixture of said solvent A and solvent B present in said composition. The one or more substituted diamondoids, one or more unsubstituted diamondoids, and any further components present (such as the one or more additives described hereinbelow) present in a given composition may be fully dissolved in solvent A, solvent B or a mixture of said solvents A and B present in said composition such that the resultant composition is a solution at room temperature. Where a propellant is additionally comprised in the compositions of the present invention, said propellant may be in the liquid state. In such cases, said liquid propellant may act as a (further) solvent for one or more or even all of the other components in the composition.

In the present technology in general, the one or more substituted diamondoids may be selected from the group consisting of one or more substituted adamantanes, one or more substituted noradamantanes, one or more substituted homoadamantanes, one or more substituted iceanes, one or more substituted BC-8s, one or more substituted diamantanes, one or more substituted triamantanes, one or more substituted isotetramantanes, one or more substituted pentamantanes, one or more substituted cyclohexamantanes, one or more substituted super-adamantanes, and any combination of any thereof. As such, the one or more substituted diamondoids of the compositions of the present technology may comprise one or more substituted adamantanes, one or more substituted noradamantanes, one or more substituted homoadamantanes, or any combination of any thereof. Preferably, the one or more substituted diamondoids of the compositions of the present technology comprise one or more substituted adamantanes.

Each of the substituents of said one or more substituted diamondoids may, for example, be independently selected from the group consisting of -R¹, -CF₃, -COOH, -CHO, -C(O)R¹, -CO₂R¹, -OH, -OR¹, -NH₂, -NHR¹, -NR¹R² wherein R¹ and R² are selected independently from each other, -halogen, =O, =NH, =NR¹, =NOR¹, and =NOH, wherein R¹ is methyl or C₂-C₆ alkyl and R² is methyl or C₂-C₆ alkyl.

The one or more substituted diamandoids comprised in the compositions of the claimed invention comprise one or more ketones of adamantane.

Within the context of the present disclosure, a substituted diamondoid is to be understood to be a diamondoid in which one or more of the carbon atoms of the hydrocarbon cage of the diamondoid in question bear a substituent other than a hydrogen atom, said substituents thus replacing one or more of the hydrogen atoms that would otherwise be present on the carbon atom in question in its unsubstituted form. As such, the substituents marked herein with "-" are bonded to a carbon atom of the cage of the diamondoid via a single covalent bond, whereas substituents marked herein with "=" are bonded to a carbon atom of the cage of the diamondoid via a double covalent bond, the presence of such a double bonded substituent, of course, only being possible at positions on the cage structure capable of establishing two further covalent bonds in addition to the C-C bonds of the cage itself connected to said position of the diamondoid in question. Such to visualize this concept, the following example is provided: In the case that the one or more diamondoids is adamantane and the substituent is "=O", it could be 2-adamantanone according to the following chemical formula:

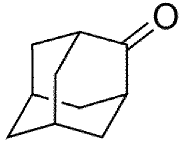

The number of substituents that each of said one or more substituted diamondoids bears is, in principle, not limited. For example, independently from each other, each of the one or more substituted diamondoids may have from one to three substituents. Independently from each other, said one or more substituted diamondoids may, for example, have only one or two substituents. Each of said one or more substituted diamondoids may, for example, have two substituents or only one substituent.

Within the context of the foregoing, the one or more substituted diamondoids of the present technology may, for example, be selected from the group consisting of methyladamantanes, 1-methyladamantane, 2-methyladamantane, 1,2-dimethyladamantane, 2,2-dimethyladamantane, 1,3-dimethyladamantane, 1,3,5-trimethyladamantane, perfluoroadamantane, perfluoromethyladamantanes, perfluoro-1-methyladamantane, perfluoro-2-methyladamantane, perfluorodimethyladamantanes, perfluoro-1,2-dimethyladamantane, perfluoro-1,3-dimethyladamantane, perfluoro-2,2-dimethyladamantane, 1-ethyladamantane, diadamantane, perfluorodiadamantane, perfluorotrimethyladamantanes, perfluoro-1,3,5-trimethyladamantane, carboxylic acids of adamantane, 1-adamantane carboxylic acid, adamantanols, 1-adamantanol, 2-adamantanol, adamantanediols, adamantane-1,2-diol, adamantane-1,3-diol, adamantanetriols, ketones of adamantane, monoketones of adamantane, 2-adamantanone, amines of adamantane, 1-adamantylamine, 2-adamantylamine, diamines of adamantane, 1,2-adamantanediamine, 1,3-adamantanediamine, 1-chloroadamantane, 2-chloroadamantane, 2-methyl-2-adamantanol, 5-hydroxy-2-adamantanone, 3-noradamantane carboxylic acid, salts of any thereof, and any combination of any thereof. More preferably, the one or more substituted diamondoids are selected from the group consisting of 1-adamantane carboxylic acid, 1-adamantanol, 2-adamantanol, 1-adamantylamine, 1-chloroadamantane, ketones of adamantane, monoketones of adamantane, 2-adamantanone, 2-methyl-2-adamantanol, 3-noradamantane carboxylic acid, 5-hydroxy-2-adamantanone, and any combination of any thereof. The one or more substituted diamandoids comprised in the compositions of the claimed invention comprise one or more ketones of adamantane.

The compositions of the present invention may comprise two or more different substituted diamondoids. For example, the compositions of the present invention may comprise two different substituted diamondoids.

Within the context of any of the foregoing, said one or more substituted diamondoids comprised in the compositions of the invention comprise one or more ketones of adamantane.

The one or more substituted diamondoids of the compositions of the invention may comprise one or more monoketones of adamantane and, preferably, the one or more substituted diamondoids of the compositions of the present invention are one or more monoketones of adamantane. The one or more substituted diamondoids of the compositions of the present invention may comprise 2-adamantanone.

The compositions of the present invention may, exemplarily, comprise only one substituted diamondoid. Preferably, the one or more substituted diamondoids of the compositions of the invention is a ketone of adamantane and, even more preferably, a monoketone of adamantane. Most preferably, the one or more substituted diamondoids of the compositions of the invention is 2-adamantanone.

In respect of the one or more substituted diamondoids present in the compositions of the present invention, 1-adamantanol may be associated with extremely long residence times (in some cases 1 week or longer) and/or incomplete sublimation. Incomplete sublimation results in the presence of coating residues on the object which has been coated and subjected to the desired optical measurement, thus not returning the object post-measurement to its original, unchanged, uncoated state without the need to have to undertake actions such as cleaning or wiping of the surface to effect removal of the coating. It may thus be desirable to minimise the quantity of 1-adamantanol in or completely omit 1-adamantanol from the compositions of the present invention. Accordingly, the compositions of the present invention may be free of 1-adamantanol.

The compositions of the present invention comprise (ii) a solvent A, (iii) a solvent B or a combination of solvent A and solvent B. Solvent A and solvent B are different from one another. Any reference herein to a "first solvent" should be understood to be a reference to solvent A. Any reference herein to a "second solvent" should be understood to be a reference to solvent B.

Solvent A may, for example, have a boiling point or boiling point range from 40 °C or more, 50 °C or more, 60 °C or more, 64.7 °C or more, 70 °C or more, 75 °C or more, 80 °C or more, or 82 °C or more to 90 °C or less, 100 °C or less, 110 °C or less, 120 °C or less, 130 °C or less, 140 °C or less, 150 °C or less, or 160 °C or less, at atmospheric pressure. For example, solvent A may have a boiling point or boiling point range from 40 °C or more to 160 °C or less, at atmospheric pressure. Solvent A may have a boiling point or boiling point range from 50 °C or more to 150 °C or less, at atmospheric pressure. Solvent A may have a boiling point or boiling point range from 60 °C or more to 140 °C or less, at atmospheric pressure.

Solvent A may have a boiling point or boiling point range from 64.7 °C or more to 130 °C or less, at atmospheric pressure. Solvent A may have a boiling point or boiling point range from 70 °C or more to 120 °C or less, at atmospheric pressure. Solvent A may have a boiling point or boiling point range from 75 °C or more to 110 °C or less, at atmospheric pressure. Solvent A may have a boiling point or boiling point range from 80 °C or more to 100 °C or less, at atmospheric pressure. Solvent A may have a boiling point or boiling point range from 82 °C or more to 90 °C or less, at atmospheric pressure. Solvent A may have a boiling point or boiling point range from 70 °C or more to 90 °C or less, at atmospheric pressure. Preferably, solvent A has a boiling point or boiling point range from 64.7 °C or more to 100 °C or less, at atmospheric pressure. More preferably, solvent A has a boiling point or boiling point range from 75 °C or more to 85 °C or less, at atmospheric pressure.

Solvent A may, for example, be selected from the group consisting of one or more alcohols; one or more C₄-C₆ (cyclo)alkylethers; one or more C₃-C₈ ketones, such as methyl ethyl ketone or acetone; one or more C₃-C₈ esters, such as methyl acetate or ethyl acetate; and any combination of any thereof. In this context, C₄-C₆ (cyclo)alkylethers refers to alkyl ethers or cycloalkyl ethers having from 4 to 6 carbon atoms, for example diethyl ether, tetrahydrofuran, and the like. Preferably, solvent A comprises one or more alcohols selected from the group consisting of C₁ to C₈ alcohols, in particular C₁ to C₈ monoalcohols. More particularly, solvent A may comprise one or more alcohols selected from the group consisting of C₁ to C₈ alkanols and C₃ to C₈ cycloalkanols, preferably one or more alcohols selected from the group consisting of methanol, ethanol, n-propanol, iso-propanol, cyclopropanol, n-butanol, sec-butanol, iso-butanol, tert-butanol, cyclobutanol, n-pentanol, 3-methylbutan-1-ol, 2-methylbutan-1-ol, 2,2-dimethylpropan-1-ol, pentan-3-ol, pentan-2-ol, 3-methylbutan-2-ol, 2-methylbutan-2-ol, cyclopentanol, hexan-1-ol, hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 2,3-dimethylbutan-2-ol, 3,3-dimethylbutan-2-ol, 2-ethylbutan-1-ol, cyclohexanol, 2-heptanol, 3-heptanol, and 4-heptanol. More preferably, solvent A is one or more alcohols selected from the group consisting of C₁ to C₈ alcohols, in particular C₁ to C₈ monoalcohols, in particular one or more alcohols selected from the group consisting of C₁ to C₈ alkanols and C₃ to C₈ cycloalkanols, more particularly one or more alcohols selected from the group consisting of methanol, ethanol, n-propanol, iso-propanol, cyclopropanol, n-butanol, sec-butanol, iso-butanol, tert-butanol, cyclobutanol, n-pentanol, 3-methylbutan-1-ol, 2-methylbutan-1-ol, 2,2-dimethylpropan-1-ol, pentan-3-ol, pentan-2-ol, 3-methylbutan-2-ol, 2-methylbutan-2-ol, cyclopentanol, hexan-1-ol, hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 2,3-dimethylbutan-2-ol, 3,3-dimethylbutan-2-ol, 2-ethylbutan-1-ol, cyclohexanol, 2-heptanol, 3-heptanol, and 4-heptanol.

As such, solvent A of the compositions of the present invention may comprise isopropanol. Solvent A of the compositions of the present invention may comprise ethanol. Solvent A of the compositions of the present invention may be isopropanol. Solvent A of the compositions of the present invention may be ethanol. Solvent A of the compositions of the present invention may comprise a mixture of isopropanol and ethanol. Solvent A of the compositions of the present invention may be a mixture of isopropanol and ethanol.

Preferably, solvent A does not comprise a hydrocarbon.

The composition may be free of said (ii) solvent A.

When the compositions of the present invention comprise 2-adamantanone, it is preferred that said compositions also comprise said (ii) solvent A.

When said (ii) solvent A is present in the compositions of the present invention, the ratio of said (i) one or more substituted diamondoids to said (ii) solvent A on a weight to weight basis may, for example, be from 100:1 to 1:100, 50:1 to 1:50, 30:1 to 1:30, 20:1 to 1:20, 15:1 to 1:20, 10:1 to 1:20, 5:1 to 1:20, 2:1 to 1:15, 1:1 to 1:15, 1:1 to 1:12 or 1:2 to 1:12. Preferably, the ratio of said (i) one or more substituted diamondoids to said (ii) solvent A on a weight to weight basis is from 20:1 to 1:20, 15:1 to 1:20, 10:1 to 1:20, 5:1 to 1:20, 2:1 to 1:15, 1:1 to 1:15, 1:1 to 1:12 or 1:2 to 1:12. More preferably, the ratio of said (i) one or more substituted diamondoids to said (ii) solvent A on a weight to weight basis is from 10:1 to 1:20, 5:1 to 1:20, 2:1 to 1:15, 1:1 to 1:15, 1:1 to 1:12 or 1:2 to 1:12 and, most preferably, the ratio of said (i) one or more substituted diamondoids to said (ii) solvent A on a weight to weight basis is from 1:2 to 1:12 or from 1:5 to 1:12.

Where, as per the claimed invention, the compositions of the present invention comprise one or more ketones of adamantane, in particular 2-adamantanone, it is preferred that said compositions also comprise said (ii) solvent A.

Preferably, said (iii) solvent B is less polar than said (ii) solvent A. For instance, said (iii) solvent B may have a lower dielectric constant (ε) at a given temperature, such as at room temperature or 25 °C, than said (ii) solvent A. The compositions of the invention may be free of said (iii) solvent B.

Solvent B may, for example, have a boiling point or a boiling point range from 25 °C or more, 30 °C or more, 35 °C or more, or 40 °C or more to 50 °C or less, 60 °C or less, 65 °C or less, 70 °C or less, 75 °C or less, 80 °C or less, 90 °C or less, 100 °C or less, 110 °C or less, 120 °C or less, or 130 °C or less, at atmospheric pressure. In respect of the above ranges, said (iii) solvent B may have a boiling point or boiling point range from 25 °C or more to 130 °C or less, at atmospheric pressure. In respect of the above ranges, said (iii) solvent B may have a boiling point or boiling point range from 30 °C or more to 120 °C or less, at atmospheric pressure. In respect of the above ranges, said (iii) solvent B may have a boiling point or boiling point range from 30 °C or more to 120 °C or less, at atmospheric pressure. In respect of the above ranges, said (iii) solvent B may have a boiling point or boiling point range from 30 °C or more to 110 °C or less, at atmospheric pressure. In respect of the above ranges, said (iii) solvent B may have a boiling point or boiling point range from 30 °C or more to 100 °C or less, at atmospheric pressure. In respect of the above ranges, said (iii) solvent B may have a boiling point or boiling point range from 45 °C or more to 110 °C or less, at atmospheric pressure. In respect of the above ranges, said (iii) solvent B may have a boiling point or boiling point range from 50 °C or more, in particular 60 °C or more, to 100 °C or less, in particular 95 °C or less, at atmospheric pressure. In respect of the above ranges, said (iii) solvent B may have a boiling point or boiling point range from 30 °C or more to 90 °C or less, at atmospheric pressure. In respect of the above ranges, said (iii) solvent B may have a boiling point or boiling point range from 30 °C or more to 80 °C or less, at atmospheric pressure. In respect of the above ranges, said (iii) solvent B may have a boiling point or boiling point range from 35 °C or more to 75 °C or less, at atmospheric pressure. In respect of the above ranges, said (iii) solvent B may have a boiling point or boiling point range from 35 °C or more to 70 °C or less, at atmospheric pressure. In respect of the above ranges, said (iii) solvent B may have a boiling point or boiling point range from 35 °C or more to 65 °C or less, at atmospheric pressure. In respect of the above ranges, said (iii) solvent B may have a boiling point or boiling point range from 40 °C or more to 65 °C or less, at atmospheric pressure. In respect of the above ranges, said (iii) solvent B may have a boiling point or boiling point range from 40 °C or more to 60 °C or less, at atmospheric pressure. In respect of the above ranges, said (iii) solvent B may have a boiling point or boiling point range from 40 °C or more to 50 °C or less, at atmospheric pressure. Within the foregoing context, solvent B may be and preferably is a hydrocarbon or mixture of hydrocarbons, preferably an aliphatic hydrocarbon or mixture of aliphatic hydrocarbons.

Within the context of any of the foregoing in relation to said (iii) solvent B, solvent B may, for example, be selected from the group consisting of one or more aliphatic straight chain, branched or cyclic C₅ to C₁₀ hydrocarbons, wherein said hydrocarbons may be saturated or unsaturated. Preferably, said (iii) solvent B is selected from the group consisting of one or more aliphatic straight chain, branched or cyclic C₅ to C₈ hydrocarbons, wherein said hydrocarbons may be saturated or unsaturated. More preferably, said (iii) solvent B is selected from the group consisting of C₅-hydrocarbons, C₆-hydrocarbons, C₇-hydrocarbons, C₈-hydrocarbons, and any combination of any thereof. Even more preferably, said (iii) solvent B is selected from the group consisting of pentane, cyclopentane, hexane, cyclohexane, heptane, cycloheptane, octane, petroleum ether, petroleum ether 30-40, petroleum ether 40-60, petroleum ether 40-65, petroleum ether 60-80, petroleum ether 60-95, petroleum ether 80-100, and any combination of any thereof. As used herein, pentane is to be understood to include n-pentane, isopentane, and neopentane, and is preferably n-pentane. As used herein, pentene is to be understood to include 1-pentene, cis-2-pentene, and trans-2-pentene. As used herein, hexane is to be understood to include n-hexane, 2-methylpentane, 3-methylpentane, 2,3-dimethylbutane, and 2,2-dimethylbutane, and is preferably n-hexane. As used herein, hexene is to be understood to include 1-hexene, trans-2-hexene, cis-2-hexene, trans-3-hexene, and cis-3-hexene. As used herein, heptane is to be understood to include n-heptane, 2-methylhexane, 3-methylhexane, 2,2-dimethylpentane, 2,3-dimethylpentane, 2,4-dimethylpentane, 3,3-dimethylpentane, 3-ethylpentane, and 2,2,3-trimethylbutane, and is preferably n-heptane. As used herein, heptene is to be understood to include 1-heptene and all other isomers of heptene. As used herein, octane is to be understood to include n-octane, 2-methylheptane, 3-methylheptane, 4-methylheptane, 3-ethylhexane, 2,2-dimethylhexane, 2,3-dimethylhexane, 2,4-dimethylhexane, 2,5-dimethylhexane, 3,3-dimethylhexane, 3,4-dimethylhexane, 3-ethyl-2-methylpentane, 3-ethyl-3-methylpentane, 2,2,3-trimethylpentane, 2,2,4-trimethylpentane, 2,3,4-trimethylpentane, and 2,2,3,3-tetramethylbutane, and is preferable n-octane. As used herein, octene is to be understood to include 1-octene and all other isomers of octene. The term petroleum ether is widely used and understood by the person skilled in the art. Petroleum ether is a distillation fraction of petroleum and consists or consists essentially of aliphatic hydrocarbons. Different fractions may be collected during petroleum distillation, thus leading to different products defined by the temperature range of the petroleum distillation at atmospheric pressure within which they were collected. For example, petroleum ether 40-65 refers to the fraction of the petroleum distillation collected between 40 °C and 65 °C, i.e. the range of hydrocarbon compounds contained therein have boiling points at atmospheric pressure ranging from 40 °C to 65 °C. Synonyms in the field for "petroleum ether" include "Wundbenzin", "Spezialbenzin", "petroleum spirit", "lignoin", "naphtha", and "petroleum benzine".

Taking account of the above, said (iii) solvent B of the compositions of the present invention may comprise petroleum ether 60-95. Said (iii) solvent B of the compositions of the present invention may be petroleum ether 60-95. Said (iii) solvent B of the compositions of the present invention may comprise cyclopentane. Said (iii) solvent B of the compositions of the present invention may be cyclopentane. Said (iii) solvent B of the compositions of the present invention may comprise a mixture of petroleum ether 60-95 and cyclopentane. Said (iii) solvent B of the compositions of the present invention may be a mixture of petroleum ether 60-95 and cyclopentane. Preferably, said (iii) solvent B comprises only hydrocarbon compounds.

The compositions of the present invention may optionally comprise (iv) one or more unsubstituted diamondoids. The employment of one or more unsubstituted diamondoids in addition to one or more substituted diamondoids may offer the advantage of being able to fine-tune (e.g. shorten) the residence time of the coating on the coated surface relative to coatings formed upon application of compositions comprising one or more substituted diamondoids but not comprising one or more unsubstituted diamondoids.

Depending on the particular application at hand and the size, shape and/or type of object on which the optical measurement (e.g. 3D scan, photogrammatic measurement, LIDAR measurement) is to be performed, a shorter or longer residence time of the applied coating may be desired. Accordingly, if a longer optical measurement time *per se* or a longer period of time between applying the composition/coating to the surface to be measured and performing the optical measurement itself is foreseen, it may be advantageous that a longer residence time (the time during which sufficient coating remains on the surface to allow a successful optical measurement to be performed) be realised. Accordingly, tuning the residence time through the employment of a mixture of both one or more substituted diamondoids and one or more unsubstituted diamondoids in the compositions of the present invention may furnish coatings exhibiting one or more of the aforementioned advantages whilst simultaneously providing a coating which resides on the surface to be measured for a prolonged period relative to coatings generated from compositions containing adamantane as the only sublimable material. Through increasing or decreasing the quantity of the one or more unsubstituted diamondoids relative to the one or more substituted diamondoids, the residence time of the coating layer may thus be tailored to the specific need of the user whilst simultaneously realising the aforementioned additional desired properties such as thinness, surface smoothness and surface homogeneity of the coating layer, the quality of optical measurement obtainable, mar resistance, dot adhesion properties, etc.

In respect of the residence time, a short residence time within the meaning of the present invention may be considered to be a residence time of less than 60 minutes. A medium residence time may be considered to be a period of 60 minutes or more to 24 hours of less. A long residence time may be considered to be a period exceeding 24 hours. The provision of products capable of being tailored to provide coatings exhibiting any of these residence times (whilst still subliming within a period of time that is of practical interest to the end user), in particular medium and long residence times, (including any length of time falling within said ranges) whilst simultaneously delivering excellent performance in terms of one or more (preferably all) of the aforementioned properties thus constitutes an object underlying the present invention. The foregoing relates to residence times which are measured in accordance with the method outlined hereinbelow.

The (iv) one or more unsubstituted diamondoids may be selected from the group consisting of adamantane, noradamantane, homoadamantane, iceane, BC-8, diamantane, triamantane, isotetramantane, pentamantane, cyclohexamantane, super-adamantane, and any combination of any thereof. Preferably, the (iv) one or more unsubstituted diamondoids are selected from the group consisting of adamantane, noradamantane, homoadamantane, and any combination of any thereof. More preferably, the (iv) one or more unsubstituted diamondoids comprise adamantane.

The compositions of the present invention may, for example, comprise only one unsubstituted diamondoid. Preferably, said (iv) one or more unsubstituted diamondoids of the compositions of the present invention is adamantane.

Where the compositions of the present invention comprise one or more unsubstituted diamondoids, in particular adamantane, it is preferred that said compositions also comprise said (iii) solvent B.

The compositions of the present invention may be free or essentially free of said (iv) one or more unsubstituted diamondoids.

The ratio of said (i) one or more substituted diamondoids to said (iv) one or more unsubstituted diamondoids in the compositions of the present invention on a weight to weight basis may be from 100:0, 95:5, 90:10, 80:20, 75:25, 1.3:1, 60:40, or 51:49 to 49:51, 40:60, 1:1.3, 25:75, 20:80, 10:90, 5:95, or 1:99. In respect of the above ratios, the ratio of (i) one or more substituted diamondoids to said (iv) one or more unsubstituted diamondoids in the compositions of the present invention on a weight to weight basis may be from 100:0 to 1:99. In respect of the above ratios, the ratio of (i) one or more substituted diamondoids to said (iv) one or more unsubstituted diamondoids in the compositions of the present invention on a weight to weight basis may be from 100:0 to 5:95. In respect of the above ratios, the ratio of (i) one or more substituted diamondoids to said (iv) one or more unsubstituted diamondoids in the compositions of the present invention on a weight to weight basis may be from 100:0 to 10:90. In respect of the above ratios, the ratio of (i) one or more substituted diamondoids to said (iv) one or more unsubstituted diamondoids in the compositions of the present invention on a weight to weight basis may be from 100:0 to 20:80. In respect of the above ratios, the ratio of (i) one or more substituted diamondoids to said (iv) one or more unsubstituted diamondoids in the compositions of the present invention on a weight to weight basis may be from 100:0 to 25:75. In respect of the above ratios, the ratio of (i) one or more substituted diamondoids to said (iv) one or more unsubstituted diamondoids in the compositions of the present invention on a weight to weight basis may be from 100:0 to 1:1.3. In respect of the above ratios, the ratio of (i) one or more substituted diamondoids to said (iv) one or more unsubstituted diamondoids in the compositions of the present invention on a weight to weight basis may be from 100:0 to 40:60. In respect of the above ratios, the ratio of (i) one or more substituted diamondoids to said (iv) one or more unsubstituted diamondoids in the compositions of the present invention on a weight to weight basis may be from 100:0 to 49:51. In respect of the above ratios, the ratio of (i) one or more substituted diamondoids to said (iv) one or more unsubstituted diamondoids in the compositions of the present invention on a weight to weight basis may be from 95:5 to 5:95. In respect of the above ratios, the ratio of (i) one or more substituted diamondoids to said (iv) one or more unsubstituted diamondoids in the compositions of the present invention on a weight to weight basis may be from 90:10 to 10:90. In respect of the above ratios, the ratio of (i) one or more substituted diamondoids to said (iv) one or more unsubstituted diamondoids in the compositions of the present invention on a weight to weight basis may be from 80:20 to 20:80. In respect of the above ratios, the ratio of (i) one or more substituted diamondoids to said (iv) one or more unsubstituted diamondoids in the compositions of the present invention on a weight to weight basis may be from 75:25 to 25:75. In respect of the above ratios, the ratio of (i) one or more substituted diamondoids to said (iv) one or more unsubstituted diamondoids in the compositions of the present invention on a weight to weight basis may be from 1.5:1 to 1:1.5. In respect of the above ratios, the ratio of (i) one or more substituted diamondoids to said (iv) one or more unsubstituted diamondoids in the compositions of the present invention on a weight to weight basis may be from 1.4:1 to 1:1.4. In respect of the above ratios, the ratio of (i) one or more substituted diamondoids to said (iv) one or more unsubstituted diamondoids in the compositions of the present invention on a weight to weight basis may be from 1.3:1 to 1:1.3.

The compositions according to the present invention may comprise a greater quantity of said (i) one or more substituted diamondoids than said (iv) one or more unsubstituted diamondoids on a weight to weight basis. In this context, the compositions may, for example, have a ratio of said (i) one or more substituted diamondoids to said (iv) one or more unsubstituted diamondoids on a weight to weight basis of from 100:0 to 1.5:1 or 1.2:1. In this context, the compositions may, for example, have a ratio of said (i) one or more substituted diamondoids to said (iv) one or more unsubstituted diamondoids on a weight to weight basis of from 100:0 to 2:1. In this context, the compositions may, for example, have a ratio of said (i) one or more substituted diamondoids to said (iv) one or more unsubstituted diamondoids on a weight to weight basis of from 100:0 to 3:1. Alternatively, the composition according to the present invention may comprise a greater quantity of said (iv) one or more unsubstituted diamondoids than said (i) one or more substituted diamondoids on a weight to weight basis. The relative quantity of said (i) one or more substituted diamondoids to said (iv) one or more unsubstituted diamondoids on a weight to weight basis may be altered in order, for example, to influence the residence time of the coating formed upon application of a composition of the invention to the surface of an object.

When both said (ii) solvent A and said (iii) solvent B are present in the compositions of the present invention, their relative ratio may be selected, for example, to ensure that the constituent components of the composition are in solution. The ratio on a weight to weight basis of said (ii) solvent A to said (iii) solvent B in the compositions of the present invention may range from 99:1, 95:5, 90:10, 80:20, 70:30, 2:1, 60:40, or 55:45 to 45:55, 40:60, 1:2, 30:70, 20:80, 10:90, 5:95, or 1:99. In respect of the above ratios, the ratio of said (ii) solvent A to said (iii) solvent B in the compositions of the present invention on a weight to weight basis may be from 99:1 to 1:99. In respect of the above ratios, the ratio of said (ii) solvent A to said (iii) solvent B in the compositions of the present invention on a weight to weight basis may be from 95:5 to 5:95. In respect of the above ratios, the ratio of said (ii) solvent A to said (iii) solvent B in the compositions of the present invention on a weight to weight basis may be from 90:10 to 10:90. In respect of the above ratios, the ratio of said (ii) solvent A to said (iii) solvent B in the compositions of the present invention on a weight to weight basis may be from 80:20 to 20:80. In respect of the above ratios, the ratio of said (ii) solvent A to said (iii) solvent B in the compositions of the present invention on a weight to weight basis may be from 3:1 to 1:3. In respect of the above ratios, the ratio of said (ii) solvent A to said (iii) solvent B in the compositions of the present invention on a weight to weight basis may be from 70:30 to 30:70. In respect of the above ratios, the ratio of said (ii) solvent A to said (iii) solvent B in the compositions of the present invention on a weight to weight basis may be from 2:1 to 1:2. In respect of the above ratios, the ratio of said (ii) solvent A to said (iii) solvent B in the compositions of the present invention on a weight to weight basis may be from 60:40 to 40:60. The ratio on a weight to weight basis of said (ii) solvent A to said (iii) solvent B in the compositions of the present invention may be 1:1. The ratio on a weight to weight basis of said (ii) solvent A to said (iii) solvent B in the compositions of the present invention may also range from 4:1 to 1:4. In one embodiment of the invention, the ratio on a weight to weight basis of said (ii) solvent A to said (iii) solvent B in the compositions of the present invention preferably ranges from 4:1 to 1:1, more preferably from 4:1 to 3:1. In a further embodiment, the ratio on a weight to weight basis of said (ii) solvent A to said (iii) solvent B in the compositions of the present invention preferably ranges from 1:2 to 1:1, more preferably from 1:1.5 to 1:1.2.

The composition according to the present invention may comprise a greater quantity of said (ii) solvent A than said (iii) solvent B on a weight to weight basis. Alternatively, the composition according to the present invention may comprise a greater quantity of said (iii) solvent B than said (ii) solvent A on a weight to weight basis.

When both said (iv) one or more unsubstituted diamondoids and said (iii) solvent B are present in the compositions of the present invention, the ratio on a weight to weight basis of said (iv) one or more unsubstituted diamondoids to said (iii) solvent B may, for example, range from 50:1 to 1:50. The ratio on a weight to weight basis of said (iv) one or more unsubstituted diamondoids to said (iii) solvent B may range from 30:1 to 1:30. The ratio on a weight to weight basis of said (iv) one or more unsubstituted diamondoids to said (iii) solvent B may range from 20:1 to 1:20. The ratio on a weight to weight basis of said (iv) one or more unsubstituted diamondoids to said (iii) solvent B may range from 10:1 to 1:20. The ratio on a weight to weight basis of said (iv) one or more unsubstituted diamondoids to said (iii) solvent B may range from 5:1 to 1:20. The ratio on a weight to weight basis of said (iv) one or more unsubstituted diamondoids to said (iii) solvent B may range from 2:1 to 1:20. The ratio on a weight to weight basis of said (iv) one or more unsubstituted diamondoids to said (iii) solvent B may range from 1:1 to 1:20. The ratio on a weight to weight basis of said (iv) one or more unsubstituted diamondoids to said (iii) solvent B may range from 1:1 to 1:10. In particularly preferred embodiments, the ratio on a weight to weight basis of said (iv) one or more unsubstituted diamondoids to said (iii) solvent B may range from 1:5 to 1:10.

The compositions of the present invention may, in addition to components (i) to (iv), further comprise one or more additives. Said one or more additives may be labelled (as is the case elsewhere herein) as component (v). Labelling said one or more additives as component (v) does not, however, mean that, in a composition comprising said one or more additives, each and every one of components (i) to (iv) must also be present. Rather this label is only used for clarity due to the order in which the individual components are discussed in the present application (said one or more additives being the fifth component discussed). As such, a composition of the present invention may, for example, comprise component (i), component (ii) and component (v) whilst not comprising components (iii) and (iv). Said one or more additives may be used to afford the compositions of the present invention any number of properties desirable and/or common in compositions employed in optical measurement technology (for example, in spray products used to prepare surfaces of objects for an optical measurement by, for instance, 3D scanning, photogrammetry, or LIDAR). In particular, the compositions of the present invention may further comprise a smell-masking or smell-imparting agent. Such agents may find particular use in the compositions of the present invention which comprise a compound which the end user may deem to have an unpleasant odour. Accordingly, the compositions of the present invention may comprise an additive capable of masking said odour. Examples of such additives are camphor and menthol. As such, the compositions of the present invention may comprise as an additive camphor, menthol or a combination thereof. A further example of such an additive is limonene, in particular D-limonene. As such, the compositions of the present invention may comprise as an additive limonene, in particular D-limonene. The compositions of the present invention may thus, for example, comprise as an additive camphor, menthol, limonene (in particular D-limonene), or any combination of any thereof.

The compositions of the present invention may comprise said additives in, for example, a quantity from 0.01 wt.% or more to 2 wt.% or less, more preferably from 0.05 wt.% or more to 1 wt.% or less, most preferably from 0.1 wt.% or more to 0.5 wt.% or less or 0.2 wt.% or less, based on the total combined weight of said additives and each of components (i) to (iv) present in the composition.

Of these additives, D-limonene is particularly preferred. The compositions of the present invention may comprise D-limonene. Preferably, the compositions of the present invention may comprise D-limonene in a quantity from 0.01 wt.% or more to 2 wt.% or less, more preferably from 0.05 wt.% or more to 1 wt.% or less, most preferably from 0.1 wt.% or more to 0.5 wt.% or less or 0.2 wt.% or less, based on the total combined weight of D-limonene and each of components (i) to (iv) present in the composition

Depending on the ultimate coating properties desired, the compositions of the present invention may additionally comprise, for example, cyclododecane. When cyclododecane is present in the compositions of the present invention, the compositions of the present invention may comprise cyclododecane in, for example, a quantity from 1 wt.% or more to 20 wt.% or less, from 1 wt.% or more to 15 wt.% or less, or from 2 wt.% or more to 10 wt.% or less, based on the total combined weight of cyclododecane, said one or more additives and each of components (i) to (iv) present in the composition.

When comprised in the compositions of the present invention, it is preferred that said compositions comprise cyclododecane in a quantity of 20 wt. or less, 15 wt.% or less, 10 wt.% or less, 5 wt.% or less, 2 wt. % or less, 1 wt.% or less, or 0.5 wt.% or less based on the total combined weight of cyclododecane, said (v) one or more additives and each of components (i) to (iv) present in the composition.

In view of the aforementioned disadvantages associated with cyclododecane, a further object underlying the present invention is to realise any one or more of the aforementioned objects through a composition that does not comprise cyclododecane. The compositions of the present invention may thus be free of cyclododecane. Preferably, the compounds of the present invention do not comprise cyclododecane.

The compositions of the present invention can be applied to the surface to be coated by any means known to the skilled person and/or standard in the art for applying coatings to surfaces, e.g., such to prepare said surfaces for an optical measurement such as a 3D scan, photogrammetry, or LIDAR measurement. In particular, the compositions of the present invention may be applied to the respective surface through, for example, spraying (with or without employment of a propellant or aerosol), dipping the object or surface in the composition, or application of the composition to the surface using an appropriate implement known in the field such as, for example, with a brush.

Particularly preferred is the application of the compositions of the invention to the surface to be coated by spraying. Application by spraying can be conducted using any of the standard methods known in the art for applying coatings to surfaces by spraying such to prepare them for an optical measurement. For example, the compositions of the invention may be applied using air brush technology or by pressurizing them with a propellant gas in spray cans or vessels standard in the art for such applications (and to pressures standard in the art for such products) and using said propellant gas to carry/propel the compositions to the surface to be coated upon release from said cans or vessels. These are methods which are well known to the skilled person. For example, application through spraying in this manner may typically be conducted at a distance of 30 cm (or even 15 to 20 cm) from the surface to be coated. The type of "spray-head" ("Sprühkopf") employed on the can, vessel or airbrush may be selected from those commonly available and used in the art and may be matched to any particular requirements of the spray operation and/or the type of object at hand to be sprayed. Most preferably, the air brush or spray head exhibits the measurements and properties of those employed in the experimental procedures disclosed herein, for example a "spray head" with a nozzle diameter of 0.51 (+/-0.02) mm or an airbrush with a nozzle diameter of 0.8 mm. Alternatively, a "spray head" with a broader nozzle diameter may be employed, for example with a diameter of 4 mm. The "spray heads" employed in the context of the present invention preferably deliver continuous dosage upon activation. The "spray heads" employed in the context of the present invention are preferably compatible with both BOV and vertical valve types. In addition to those employed in the experimental procedures disclosed herein, a further example of an application system suitable for applying the compositions of the invention is an aerosol can (for example, a 400 mL can of 65 mm diameter and 157 mm tall) fitted with a ball valve stem (for example of 4 mm diameter, e.g. an Ariane-ball valve stem of 4 mm diameter) and a "spray head", for example a "spray head" with a 4 mm nozzle diameter. The spray head may exhibit a "fit in" neck finish, be compatible with BOV and vertical valves and deliver continuous dosage. In this regard, where commercial product names or trademarks are used herein to describe these or any other products, the properties, measurements, dimensions, compositions etc. of said products are to be understood to be those of the corresponding products available under said names or trademarks on the filing date (priority date where applicable) of the present application.

Accordingly, the compositions of the present invention may further comprise a propellant. A propellant is not to be considered an "additive" within the context in which the term "additive" is used in the present invention. Said propellant may be labelled (as is the case elsewhere herein) as component (vi). Labelling said propellant as component (vi) does not, however, mean that, in a composition comprising said propellant, each and every one of components (i) to (v) must also be present. Rather this label is only used for clarity due to the order in which the individual components are discussed in the present application (said propellant being the seventh component discussed). As such, a composition of the present invention may, for example, comprise component (i), component (ii) and component (vi) whilst not comprising components (iii), (iv), or (v). The propellant may be any propellant known in the art for use in aerosol sprays. Such propellants are well known to the skilled person. The propellant may, for example, be selected from butane, propane, isobutane, 1,3,3,3-tetrafluoropropene, 2,3,3,3-tetrafluoropropene, and any combination of any thereof. The propellant may preferably be selected from butane, propane, isobutane, and any combination of any thereof.

A typical propellant in this context is a mixture of butane: propane: isobutane, for example in a ratio of 74:23:3 on a weight to weight basis. Where present in the compositions of the present invention, the propellant may, relative to the other components of the composition, be employed in any amount sufficient to propel the composition onto the desired surface. Particularly, when a propellant is comprised in the compositions of the present invention, it may be present in said compositions in an amount from 5 wt.% or more to 95 wt.% or less, preferably from 20 wt.% or more to 80 wt.% or less, more preferably from 25 wt.% or more to 75 wt.% or less, based on the total weight of the composition. Within this context, the propellant may preferably be present in a quantity of 30 wt.% or more to 75 wt.% or less, more preferably from 40 wt.% or more to 75 wt.% or less, most preferably from 50 wt.% or more to 75 wt.% or less, based on the total weight of the composition.

The compositions of the invention may be free of butane, propane, isobutane, 1,3,3,3-tetrafluoropropene, 2,3,3,3-tetrafluoropropene, or any combination of any thereof. The compositions of the invention may be free of butane, propane, isobutane, or any combination of any thereof. As outlined above, the compositions of the invention may be free of propellant.

When a propellant is used in the compositions of the present invention, the propellant may be in the liquid state.

As an alternative to the above-listed propellant(s), carbon dioxide may be employed. As such, carbon dioxide may be employed as the propellant in the compositions of the present invention in the quantities stipulated in the preceding paragraph. Alternatively, pressurised air may be used as the propellant in the compositions of the present invention and may be employed in the quantities stipulated in the preceding paragraph.

The compositions of the present invention may also be applied to the surface to be coated without the use of a propellant or pressurised gas. For example, they may be applied using a spray bottle, for example a spray bottle fitted with a handoperated atomiser/nebuliser/spray-head.

The compositions of the present invention may be essentially free of isopropanol. In fact, the compositions of the present invention may be free of isopropanol.

The compositions of the present invention may be essentially free of cyclohexane. In fact, the compositions of the present invention may be free of cyclohexane.

The compositions of the present invention may be essentially free of isopentane. In fact, the compositions of the present invention may be free of isopentane.

The compositions of the present invention may be essentially free of isopentane. In fact, the compositions of the present invention may be free of isopentane.

The compositions of the present invention may be free or essentially free of open chain C₃-C₁₃ dialkyl ketones .

The compositions of the present invention may be essentially free of acetone. The compositions of the present invention may be free of acetone.

The compositions of the present invention may be free or essentially free of methyl ethyl ketone.

Within the context of all of the foregoing, the compositions of the present invention may comprise the (i) one or more substituted diamondoids in a quantity of 50 wt.% or less, based on the total weight of components (i) to (iv) present in the composition. As such, the compositions of the present invention may, for example, comprise 40 wt.% or less of the (i) one or more substituted diamondoids, based on the total weight of components (i) to (iv) present in the composition. The compositions of the present invention may comprise the (i) one or more substituted diamondoids in a quantity of 30 wt.% or less, based on the total weight of components (i) to (iv) present in the composition. The compositions of the present invention may comprise the (i) one or more substituted diamondoids in a quantity of 20 wt.% or less, based on the total weight of components (i) to (iv) present in the composition. In fact, the compositions of the present invention may comprise 15 wt.% or less of the (i) one or more substituted diamondoids, based on the total weight of components (i) to (iv) present in the composition. The minimum quantity of the (i) one or more substituted diamondoids may be, for example, 0.5 wt.% or 1 wt.%, i.e. the compositions of the present invention may comprise 0.5 wt.% or more or 1 wt.% or more of the (i) one or more substituted diamondoids, based on the total weight of components (i) to (iv) present in the composition. The quantity of the (i) one or more substituted diamondoids in the compositions of the present invention may be 2 wt.% or more, based on the total weight of components (i) to (iv) present in the composition. The quantity of the (i) one or more substituted diamondoids in the compositions of the present invention may be 4 wt.% or more, based on the total weight of components (i) to (iv) present in the composition. The quantity of the (i) one or more substituted diamondoids in the compositions of the present invention may be 10 wt.% or more, based on the total weight of components (i) to (iv) present in the composition.

Within the context of all of the foregoing, the compositions of the present invention may comprise said (ii) solvent A in a quantity from 0.5 wt.% or more, 1.0 wt.% or more, 2 wt.% or more, 5 wt.% or more, 10 wt.% or more, 25 wt.% or more to 95 wt.% or less, 75 wt.% or less, 60 wt.% or less or 50 wt.% or less, based on the total weight of components (i) to (iv) present in the composition. In respect of the above, the quantity of said (ii) solvent A may range from 0.5 wt.% or more to 95 wt.% or less, 1.0 wt.% or more to 75 wt.% or less, 2 wt.% or more to 60 wt.% or less or 10 wt.% or more to 50 wt.% or less, based on the total weight of components (i) to (iv) present in the composition. The quantity of said (ii) solvent A may, for example, range from 25 wt.% or more to 95 wt.% or less, based on the total weight of components (i) to (iv) present in the composition.

The compositions of the present invention may comprise said (iii) solvent B in a quantity of 60 wt.% or less, based on the total weight of components (i) to (iv) present in the composition. The compositions of the present invention may also comprise said (iii) solvent B in a quantity of 50 wt.% or less, based on the total weight of components (i) to (iv) present in the composition. The compositions of the present invention may also comprise the (iii) solvent B in a quantity of 40 wt.% or less, based on the total weight of components (i) to (iv) present in the composition. The quantity of said (iii) solvent B in the compositions of the present invention may be 30 wt.% or less, 20 wt.% or less, 15 wt.% or less or 10 wt.% or less, based on the total weight of components (i) to (iv) present in the composition. Within this context, the quantity of said (iii) solvent B in the compositions of the present invention may, for example, be 1 wt.% or more, 5 wt.% or more, or 10 wt.% or more, based on the total weight of components (i) to (iv) present in the composition.

When present in the compositions of the present invention, said compositions may comprise the (iv) one or more unsubstituted diamondoids in a quantity of, for example, 50 wt.% or less, 40 wt.% or less, 30 wt.% or less, 20 wt.% or less, 15 wt.% or less, 10 wt.% or less, or 7 wt.% or less based on the total weight of components (i) to (iv) present in the composition. In such compositions, the minimum quantity of the (iv) one or more unsubstituted diamondoids may, for example, be 0.5 wt.% or more, 1 wt.% or more, or 5 wt.% or more based on the total weight of components (i) to (iv) present in the composition.

The total combined quantity of (i) one or more substituted diamondoids and, where present, (iv) one or more unsubstituted diamondoids in the compositions of the present invention may be, for example, from 0.5 wt.% or more, 1.0 wt.% or more, 1.5 wt.% or more, 2.5 wt.% or more, 3 wt.% or more, 5 wt.% or more, or 6 wt.% or more, based on the total weight of components (i) to (iv) present in the composition. In respect of these ranges, the compositions of the present invention may, in particular, have a lower end point of 1.0 wt.% or more. In respect of these ranges, the compositions of the present invention may preferably have a lower end point of 1.5 wt.% or more. In respect of these ranges, the compositions of the present invention may more preferably have a lower end point of 2.5 wt.% or more. In respect of these ranges, the compositions of the present invention may still more preferably have a lower end point of 3 wt.% or more. In respect of these ranges, the compositions of the present invention may most preferably have a lower end point of 5 wt.% or more. In respect of these ranges, the compositions of the present invention may most preferably have a lower end point of 6 wt.% or more. With regards to an upper limit of the total combined quantity of (i) one or more substituted diamondoids and, where present, (iv) one or more unsubstituted diamondoids in the compositions of the present invention, said (i) one or more substituted diamondoids and, where present, (iv) one or more unsubstituted diamondoids may be present in, for example, 60 wt.% or less, 50 wt.% or less, 40 wt.% or less, 30 wt.% or less, 20 wt.% or less, 15 wt.% or less, 12 wt.% or less, or 10 wt.% or less, based on the total weight of components (i) to (iv) present in the composition. In respect of these ranges, the compositions of the present invention may, in particular, have an upper limit of 60 wt.% or less. In respect of these ranges, the compositions of the present invention may preferably have an upper limit of 50 wt.% or less. In respect of these ranges, the compositions of the present invention may more preferably have an upper limit of 40 wt.% or less. In respect of these ranges, the compositions of the present invention may more preferably have an upper limit of 30 wt.% or less. In respect of these ranges, the compositions of the present invention may more preferably have an upper limit of 20 wt.% or less. In respect of these ranges, the compositions of the present invention may more preferably have an upper limit of 15 wt.% or less. In respect of these ranges, the compositions of the present invention may more preferably have an upper limit of 12 wt.% or less. In respect of these ranges, the compositions of the present invention may more preferably have an upper limit of 10 wt.% or less. The compositions of the present invention exhibiting these weight ranges may be free of the (iv) one or more unsubstituted diamondoids. The compositions of the present invention exhibiting these weight ranges may contain both the (i) one or more substituted diamondoids and the (iv) one or more unsubstituted diamondoids.

The total combined quantity of said (i) one or more substituted diamondoids and, where present, said (iv) one or more unsubstituted diamondoids in the compositions of the present invention may be from 0.5 wt.% or more to 50 wt.% or less, from 1.0 wt.% or more to 40 wt.% or less, from 1.0 wt.% or more to 30 wt.% or less, from 5 wt.% or more to 30 wt.% or less from 8 wt.% or more to 25 wt.% or less, based on the total weight of components (i) to (iv) present in the composition. In one preferred embodiment, the total combined quantity of (i) one or more substituted diamondoids and, where present, (iv) one or more unsubstituted diamondoids in the compositions of the present invention may be from 20 wt.% or more to 25 wt.% or less, based on the total weight of components (i) to (iv) present in the composition. In another preferred embodiment, the total combined quantity of (i) one or more substituted diamondoids and, where present, (iv) one or more unsubstituted diamondoids in the compositions of the present invention may be from 8 wt.% or more to 12 wt.% or less and, more preferably, from 10 wt.% or more to 12 wt.% or less, based on the total weight of components (i) to (iv) present in the composition. The compositions of the present invention exhibiting these weight ranges may be free of the (iv) one or more unsubstituted diamondoids. The compositions of the present invention exhibiting these weight ranges may be free of the (iv) one or more unsubstituted diamondoids and solvent A or solvent B. The compositions of the present invention exhibiting these weight ranges may contain the (i) one or more substituted diamondoids, the (iv) one or more unsubstituted diamondoids as well as solvent A and solvent B.

Depending on, for example, whether a propellant is employed in the compositions of the present invention, the combined quantity of components (i) to (v) present in said compositions relative to the total weight of the composition will vary. For example, in the compositions of the present invention, the total weight of components (i) to (v) present in the composition may constitute from 5 wt.% or 10 wt.% to 100 wt.% of the total weight of the composition. Examples of compositions falling within this range include compositions in which the total weight of components (i) to (v) present in the composition constitutes from 15 wt.% or 20 wt.% to 100 wt.% of the total weight of the composition. Examples of compositions falling within this range include compositions in which the total weight of components (i) to (v) present in the composition constitutes from 25 wt.% or 30 wt.% to 100 wt.% of the total weight of the composition. Examples of compositions falling within this range include compositions in which the total weight of components (i) to (v) present in the composition constitutes from 40 wt.% to 100 wt.% of the total weight of the composition. Examples of compositions falling within this range include compositions in which the total weight of components (i) to (v) present in the composition constitutes from 50 wt.% to 100 wt.% of the total weight of the composition. Examples of compositions falling within this range include compositions in which the total weight of components (i) to (v) present in the composition constitutes from 60 wt.% to 100 wt.% of the total weight of the composition. Examples of compositions falling within this range include compositions in which the total weight of components (i) to (v) present in the composition constitutes from 70 wt.% to 100 wt.% of the total weight of the composition. Examples of compositions falling within this range include compositions in which the total weight of components (i) to (v) present in the composition constitutes from 75 wt.% to 100 wt.% of the total weight of the composition. Examples of compositions falling within this range include compositions in which the total weight of components (i) to (v) present in the composition constitutes from 80 wt.% to 100 wt.% of the total weight of the composition. Examples of compositions falling within this range include compositions in which the total weight of components (i) to (v) present in the composition constitutes from 90 wt.% or 95 wt.% to 100 wt.% of the total weight of the composition. As outlined above, exemplarily, in the compositions of the present invention, the total weight of components (i) to (v) present in the composition may constitute from 5 wt.% to 100 wt.% of the total weight of the composition. Further examples of compositions falling within this range include compositions in which the total weight of components (i) to (v) present in the composition constitutes from 5 wt.% to 60 wt.% of the total weight of the composition. Further examples of compositions falling within this range include compositions in which the total weight of components (i) to (v) present in the composition constitutes from 5 wt.% to 50 wt.% of the total weight of the composition. Further examples of compositions falling within this range include compositions in which the total weight of components (i) to (v) present in the composition constitutes from 5 wt.% to 40 wt.% of the total weight of the composition. Further examples of compositions falling within this range include compositions in which the total weight of components (i) to (v) present in the composition constitutes from 5 wt.% to 30 wt.% of the total weight of the composition. Further examples of compositions falling within this range include compositions in which the total weight of components (i) to (v) present in the composition constitutes from 5 wt.% to 20 wt.% of the total weight of the composition. Further examples of compositions falling within this range include compositions in which the total weight of components (i) to (v) present in the composition constitutes from 5 wt.% to 10 wt.% of the total weight of the composition. Accordingly, the total (i.e. combined) weight of components (i) to (v) present in the compositions of the present invention may, exemplarily, be 5 wt.% or more, 10 wt.% or more, 15 wt.% or more, 20 wt.% or more, 25 wt.% or more, 30 wt.% or more, 40 wt.% or more, 50 wt.% or more, 60 wt.% or more, 70 wt.% or more, 75 wt.% or more, 80 wt.% or more, 90 wt.% or more, 95 wt.% or more, or even 100 wt.%. The total (i.e. combined) weight of components (i) to (v) present in the compositions of the present invention may, exemplarily, be 100 wt. % or less, 95 wt. % or less, 90 wt.% or less, 80 wt.% or less, 75 wt.% or less, 70 wt.% or less, 60 wt.% or less, 50 wt.% or less, 40 wt.% or less, 35 wt.% or less, 30 wt.% or less, 25 wt.% or less, 20 wt.% or less, 15 wt.% or less, 10 wt.% or less, or even 5 wt.%. Within the context of all of the foregoing, when the total (i.e. combined) weight of components (i) to (v) present in the composition does not constitute 100 wt.% of the total weight of the composition, the remainder of the total weight of the composition is preferably propellant. For example, should the total combined weight of components (i) to (v) present in the composition be 30 wt.%, based on the total weight of the composition, it is preferred that said composition comprises 70 wt.% propellant, based on the total weight of the composition. Within this context the propellant can be any propellant described elsewhere herein. Of course, not each and every one of components (i) to (v) constitutes an essential feature of the compositions of the present invention and the wording "the total weight of components (i) to (v) present in the compositions of the present invention ... based on the total weight of the composition" is to be understood to simply refer to the total combined weight of whichever of components (i) to (v) are actually present in a given composition, based on the total weight of the composition. For instance, in this context, if only components (i), (ii) and (iv) are present and components (iii) and (v) are not, the "the total weight of components (i) to (v) present in the composition" will be equal to the total combined weight of components (i), (ii) and (iv), based on the total weight of the composition.

While the compositions of the invention as defined hereinabove comprise either said (ii) solvent A, said (iii) solvent B, or a mixture of said (ii) solvent A and said (iii) solvent B, when the compositions of the invention comprise a propellant (in particular a propellant in the liquid state such as a liquified propellant), the propellant may also act as a solvent for one or more of components (i), (iv) and (v), thus being capable of dissolving one or more of said components either partially or completely. In such cases, the amount of the other solvents present may be greatly reduced. Accordingly, in a further aspect of the invention, where the compositions of the present invention comprise a propellant, the quantity of said (ii) solvent A, when present in the composition, may, for example, be reduced to 5 wt.% or less, preferably 2 wt.% or less, more preferably 1 wt.% or less, still more preferably 0.5 wt.% or less, most preferably 0.1 wt.% or less based on the total weight of the composition. In this same aspect of the invention, similarly, where the compositions of the present invention comprise a propellant, the quantity of said (iii) solvent B, when present in the composition, may, independent of the quantity of said (ii) solvent A, be reduced to 5 wt.% or less, preferably 2 wt.% or less, more preferably 1 wt.% or less, still more preferably 0.5 wt.% or less, most preferably 0.1 wt.% or less based on the total weight of the composition. As such, in this aspect of the invention, the quantity of said (ii) solvent A, when present in the composition, may be 5 wt.% or less, preferably 2 wt.% or less, more preferably 1 wt.% or less, still more preferably 0.5 wt.% or less, most preferably 0.1 wt.% or less based on the total weight of the composition and the quantity of said (iii) solvent B may be 5 wt.% or less, preferably 2 wt.% or less, more preferably 1 wt.% or less, still more preferably 0.5 wt.% or less, most preferably 0.1 wt.% or less based on the total weight of the composition. In this context, the compositions of the invention may be essentially free of (ii) solvent A and/or (iii) solvent B. In this context, the compositions of the invention may be essentially free of (ii) solvent A and (iii) solvent B. In this context, the compositions of the invention may be free of (ii) solvent A and/or (iii) solvent B. In this context, the compositions of the invention may be free of (ii) solvent A and (iii) solvent B.

Within the context of all of the foregoing in respect of this aspect of the invention, the quantity of the propellant in said compositions may, for example, be from 30 wt.% or more to 95 wt.% or less, preferably from 40 wt.% or more to 95 wt.% or less, more preferably from 50 wt.% or more to 95 wt.% or less, based on the total weight of the composition. For instance, the quantity of the propellant in said compositions may be from 70 wt.% or more to 95 wt.% or less, based on the total weight of the composition, or from 80 wt.% or more to 95 wt.% or less, based on the total weight of the composition.

Within the context of all of the foregoing in respect of this aspect of the invention, all other components and their respective quantities (both absolute and relative to the other components present) may be as described and defined elsewhere herein. Furthermore, when the compositions of this aspect of the present invention are essentially free of, or free of (i.e. do not comprise), said (ii) solvent A and said (iii) solvent B, and comprise 1-adamantanol, the composition need not necessarily comprise one or more additional substituted diamondoids other than 1-adamantanol. Accordingly, in this aspect of the invention, the composition may be essentially free of, or free of, said (ii) solvent A and said (iii) solvent B, and comprise 1-adamantanol without further comprising one or more additional substituted diamondoids other than 1-adamantanol. Also in this aspect of the invention, the composition may be essentially free of, or free of, said (ii) solvent A and said (iii) solvent B, with the proviso that, when said composition comprises 1-adamantanol, the composition further comprises one or more additional substituted diamondoids other than 1-adamantanol.

The compositions of this aspect of the invention carry a number of advantages. By employing reduced quantities of different chemical solvents (solvent A and/or solvent B), not only can, for example, production costs be reduced but also the safety of both the production process and the ultimate use of the compositions by the end user, who faces reduced exposure to chemicals which may be associated with one or more health or safety issues (for instance as classified under the Global Harmonized System (GHS) of Classification and Labelling of Chemicals). The reduction of the quantities of different chemical solvents may also be associated with a more environmentally friendly product. Furthermore, depending on the propellant employed, this may also allow a product to be furnished which has substantially reduced flammability or is even non-flammable.

The composition of the present technology may be free of endotrimethylenenorbornene. The compositions of the present technology may be free of glycolethers. The compositions of the present technology may be free of alkyl ethers of alkylene glycols, in particular mono- and dialkyl ethers of alkylene glycols. The compositions of the present technology may be and are preferably free of conventional rust inhibitors, in particular morpholine, diisopropylamine, dicyclohexylamine, diisobutylamine, piperidine, propargyl alcohol, 2-butyne-1-ol or any combination of any thereof. Preferably, the compositions of the present technology are free from all of the aforementioned compounds.

In light of the above-outlined object underlying the present invention, said (i) one or more substituted diamondoids may be sublimable, preferably sublimable at atmospheric pressure, more preferably sublimable at atmospheric pressure and at a temperature of 20 °C to 50 °C and, most preferably, sublimable at atmospheric pressure and at a temperature of 20 °C to 35 °C. Similarly, said (iv) one or more unsubstituted diamondoids may be sublimable, preferably sublimable at atmospheric pressure, more preferably sublimable at atmospheric pressure and at a temperature of 20 °C to 50 °C and, most preferably, sublimable at atmospheric pressure and at a temperature of 20 °C to 35 °C. Such to be able, post optical measurement, to furnish in its original state (i.e. free of residues of the coating resulting from the application thereto of the composition of the present invention) an object that has been subject to an optical measurement following application thereto of a composition of the present invention, it is most preferred that said (i) one or more substituted diamondoids and said (iv) one or more unsubstituted diamondoids are sublimable at atmospheric pressure, more preferably sublimable at atmospheric pressure and at a temperature of 20 °C to 50 °C and, most preferably, sublimable at atmospheric pressure and at a temperature of 20 °C to 35 °C.

The type of surface on which the compositions of the present invention can be employed to provide a coating layer exhibiting the properties and advantages described herein is not particularly restricted. Accordingly, the compositions of the invention may be employed to form coating layers on, inter alia, glass surfaces, metal surfaces, polymeric surfaces, acrylic surfaces, wooden surfaces, enamel surfaces, textile (e.g. woven fabric, non-woven fabric, or leather) surfaces, ceramic surfaces and any other type of surface which may require improvement in terms of its ability to allow the generation of a high quality optical measurement (e.g. 3D scan, photogrammatic measurement, LIDAR measurement). Of particular importance are surfaces of the aforementioned types which are transparent, translucent, light-absorbing, reflective and/or exhibit gloss finishes. Typically, such surfaces may be surfaces of parts (including mechanical component parts), particularly metallic parts, which find use in the field of precision engineering.

As outlined hereinabove, an object prepared for optical measurement/scanning through application of a coating based on the composition of the present invention should, according to one object underlying the present invention, ideally be returned post-measurement in its original, unchanged, uncoated state, in particular without the need to have to undertake actions such as cleaning or wiping of the surface to effect removal of the coating. Accordingly, the compositions of the present invention should ideally not cause any change (structural, surfacerelated etc.) to the object onto which they are applied. As such, the constituent components of the compositions of the present invention should ideally be chemically inert towards the surfaces onto which said compositions are applied. When applied to, for example, polymeric or acrylic objects, it is thus important that the components do not react with, dissolve or impair the surface of said objects in any other way.

Accordingly, the compositions of the present invention are preferably free of components which may impair polymeric or acrylic surfaces, for example of solvents which may impair polymeric or acrylic surfaces. Examples of such solvents include ketones such as open chain C₃₋₁₃ dialkyl ketones (i.e. ketones in which the carbonyl group is flanked on either side by an alkyl group, the ketone compound containing a total of 3 to 13 carbon atoms with said compound being non-cyclic), in particular acetone, and methylethylketone. The compositions of the present technology are thus preferably free (or essentially free) of open chain C₃₋₁₃ dialkyl ketones such as acetone and/or methylethylketone, more preferably free (or essentially free) of acetone and methylethylketone. By omitting such compounds/solvents from the compositions of the present invention, the versatility of the said compositions in respect of compatibility with the types of different objects that can be optically measured/scanned is increased.

The compositions of the present invention may be employed to provide a surface film (also referred to herein as a coating, coating film, coating layer) on the surface of an object to which they are applied. As discussed hereinabove, from the perspective of the quality of the optical measurement, it is advantageous when such surface films are as thin as possible. The surface films produced upon application of the compositions of the present invention may be thin. More particularly, said surface films may have a film thickness ranging from 0.1 µm to 50 µm. Preferably, the film thickness of said surface films ranges from 0.1 µm to 30 µm, more preferably from 0.1 µm to 20 µm, even more preferably from 0.1 µm to 10 µm and, most preferably, 0.1 µm to 8 µm or 5 µm. For example, the film thickness of said surface films may typically range from 0.3 µm to 6 µm.

In accordance with the above-outlined object underlying the present invention, the application of the compositions of the present invention to the surface of an object should give rise to a surface film/coating that is a highly homogenous, thin, and smooth scannable coating on the surface of said object, in particular in order to enable precise, high quality, high resolution optical measurements (e.g. 3D scans, photogrammatic measurements, LIDAR measurements) of said surfaces of these objects to be generated. Accordingly, the compositions of the present invention find use in optical measurement applications, in particular in preparing the surface of an object for an optical measurement. In the context of the present invention, an optical measurement may constitute any kind of optical measurement known to the skilled person for measuring the surfaces of objects (in particular for generating a precise image of the surface topography of an object), for example a 3D scan measurement, a photogrammetry measurement (also referred to herein as a photogrammatic measurement) or a LIDAR measurement. The compositions of the present invention can thus be used for facilitating an optical measurement of an object, in particular of the surface of an object. As such, the compositions of the present invention can thus be used in the generation of an image of an object, in particular in the generation of an image of the surface of an object, more particularly wherein said image is produced through an optical measurement such as a 3D scanning measurement, a photogrammatic measurement or a LIDAR measurement. As such, the compositions of the present invention can be employed to increase the scannability, scan quality, scan precision and/or scan resolution of an object, in particular in relation to 3D scans of said object. By scannability is meant the ability of an object to allow a 3D scan (or photogrammetry measurement or LIDAR measurement) thereof to be reliably generated. The compositions may achieve this through and thus find use in increasing the diffuseness of light reflected from an object, particularly from an object on which a 3D scan is to be performed thus leading to increased scannability, scan precision, scan quality and/or scan resolution. The compositions of the present invention may find further use in providing any other advantages taught herein to be associated therewith. For example, the compositions of the present invention may find use in preparing surfaces of objects for scan measurements and, in particular, 3D scan measurements. Furthermore, the compositions of the invention may be used to provide such coated surfaces which exhibit excellent mar resistance, adhesion of, inter alia, reference dots required by the scanner to produce 3D scan measurements, the ability to allow removal and re-adhesion of such dots without significantly degrading the surface quality, and/or weatherability such as durability against direct contact with running water. The compositions of the invention may be used to prepare surfaces already protected by or coated with films of, for example, oil or lubricants for optical measurements such as 3D scan measurements.

The present invention thus also relates to a method of preparing the surface of an object for an optical measurement, said method comprising the step of (a) applying any composition according to the invention to the surface of an object to be optically measured. The method may further comprise the step of allowing the any solvents present to at least partially and preferably entirely evaporate in order to give rise to a coating on said surface. Said coating is preferably non-liquid and/or a non-solution. Said coating preferably gives rise to a surface which exhibits increased opaqueness relative to the corresponding uncoated surface and is most preferably opaque. Said coating is preferably solid at room temperature. Said coating is preferably essentially free of residual solvent.

The present invention further relates to a method of conducting an optical measuring of the surface of an object, said method comprising the aforementioned step or steps for preparing the surface of the object for an optical measurement and the additional subsequent step of (b) conducting an optical measurement of the surface of the object to which the composition has been applied. Said optical measurement may be, for example, a 3D-scan measurement, a photogrammatic measurement (i.e. a measurement using photogrammetry), or a LIDAR measurement (i.e. a measurement using LIDAR technology). As such, in addition to 3D scanning technology, the optical measurement technology applications for which the compositions of the present technology are suitable for use in also include photogrammetry and LIDAR. Accordingly, in one embodiment the compositions of the present technology are used in photogrammetry or LIDAR applications, for example, to prepare the surface of an object for optical measurement by photogrammetry or LIDAR technology. The compositions of the present technology can be used to increase the quality and/or resolution of a scan of an object, wherein said scan is conducted using photogrammetry or LIDAR technology. The compositions of the present technology can be used to improve the scannability by photogrammetry or LIDAR technology of a surface, i.e. the susceptibility of a surface to allowing a scan of it to be produced using photogrammetry or LIDAR technology. Accordingly, the present invention relates to a method of improving the scannability by photogrammetry or LIDAR of a surface, said method comprising the step of applying a composition of the present technology to the surface to be scanned by photogrammetry or LIDAR. The present invention also relates to a method of preparing the surface of an object for a photogrammetry or LIDAR measurement, said method comprising the step of applying a composition according to the present technology to the surface to be measured. Accordingly, the compositions of the present invention find use in photogrammetry and LIDAR (scanning) applications, in particular in preparing the surface of an object for a photogrammetry or LIDAR (scan) measurement and/or facilitating the photogrammetry or LIDAR (scanning) measurements of objects and/or generating photogrammetry or LIDAR measurements (scans) of objects, particularly of the surfaces of objects. As such, the compositions of the present invention can be employed to increase the scannability, scan quality, scan precision and/or scan resolution of an object, in particular in relation to photogrammetry or LIDAR scans of said object. By scannability is meant the ability of an object to allow a photogrammetry or LIDAR measurement thereof to be reliably generated.

The compositions of the present invention may achieve this through (and thus find use in) increasing the diffuseness of light reflected from an object, particularly from an object on which a photogrammetry or LIDAR measurement/scan is to be performed thus leading to increased scannability, scan precision, scan quality and/or scan resolution.

The compositions of the present invention may find further use in providing any other advantages taught herein to be associated therewith. For example, the compositions of the present invention may be of use for the temporary sealing and/or strengthening of sensitive or decaying materials of a surface of an object in the context of restoration or conservation of works of art of various types (e.g. wall paintings), since the surfaces of said works of art could be reversibly coated in order to protect said works of art during subsequent restoration or conservation steps. Another example includes the use of the compositions of the present invention in the field of construction, in particular for drawing temporary signs or markings on, for example, walls, floors, roads, pavements, sidewalks, the ground etc. and, thereby, typically remain as unsightly contaminations after the work has been carried out and have to be removed at great expense. The inventive compositions allow for the drawing of such temporary, i.e. reversible/selfremovable, signs and markings which do not carry further costs with respect to their removal.

The inventive compositions may also be used in the temporary blockage of optical fibres; the adjustment of white balance in the fields of photography and film; reducing the reflectiveness of surfaces, for example, in the fields of photography and film; to furnish coatings that facilitate the identification of surface deformities or inconsistencies (e.g. dents) of an object, for example in surfaces such as metal surfaces, in particular in the automotive and aviation fields; as a carrier medium for (complex) lubricants and oils; in the dental industry, in particular in facilitating the generation of replications of teeth and gums for potential use in the manufacture of dental prosthetics such as dentures, dental implants, crowns, bridges etc.; in OMV (on machine verification); for (temporarily) disabling photoelectric sensors, optical/light barriers etc.; for preparing surfaces for dynamic measurements such as real-time measurement of deformations (e.g. by laser doppler velocimetry, Aramis, Argus, Pontus, etc.); in laser holography; to produce protective coatings on an object; to produce surface coatings (both protective and for optimising surfaces for optical measurement) in the field of archaeology; in wood restoration. Further applications include in the field of (sheet) metal welding to temporarily highlight touch out/marking scratches (both in automated and manual marking processes), in the field of die-spotting/blueing for (functional) surfaces to fit them perfectly, as a release agent in demoulding processes, and as a (sublimable) delustering agent.

The compositions of the invention can be made as outlined in the examples set forth hereinbelow. Accordingly, a further aspect of the invention relates to a method of manufacture of the compositions of the invention. In particular, this aspect of the invention concerns a method of manufacturing a composition according to the invention, comprising the step of mixing together each of the components present in the composition.

One particularly preferred embodiment of the invention relates to a composition which comprises, consists essentially of, or consists of 6 to 8 wt.% of said (i) one or more substituted diamondoids, 15 to 20 wt.% of said (ii) solvent A, 4 to 6 wt.% of said (iii) solvent B, and 65 to 75 wt.% of a propellant, based on the total weight of the composition. Within the context of this embodiment, said propellant may be a mixture of butane: propane, is preferably a mixture of butane: propane: isobutane, most preferably a mixture of butane: propane: isobutane in a ratio of 74:23:3 on a weight to weight basis. Alternatively, the propellant may be propane. This composition preferably additionally contains 0.01 to 0.10 wt.% of said (v) one or more additives, based on the total weight of the composition. Within the context of this embodiment, said (i) one or more substituted diamondoids is most preferably 2-adamantanone. Within the context of this embodiment, said (ii) solvent A is preferably ethanol and/or isopropanol, most preferably ethanol. Within the context of this embodiment, said (iii) solvent B is preferably petroleum ether 60/95 and/or cyclopentane, most preferably cyclopentane. Within the context of this embodiment, said (v) one or more additives is most preferably D-limonene.

One particularly preferred embodiment of the invention relates to a composition which comprises, consists essentially of, or consists of 3.5 to 5.5 wt.% of said (i) one or more substituted diamondoids, 35 to 45 wt.% of said (ii) solvent A, 45 to 55 wt.% of said (iii) solvent B, and 4.5 to 6.5 wt.% of said (iv) one or more unsubstituted diamondoids, based on the total weight of the composition. Within the context of this embodiment, said (i) one or more substituted diamondoids is most preferably 2-adamantanone. Within the context of this embodiment, said (ii) solvent A is preferably ethanol and/or isopropanol, most preferably a mixture of isopropanol and ethanol (in particular in a ratio of 1:2 to 1:3 on a weight to weight basis). Within the context of this embodiment, said (iii) solvent B is preferably petroleum ether 60/95 and/or cyclopentane, most preferably petroleum ether 60/95. Within the context of this embodiment, said (iv) one or more unsubstituted diamondoids is most preferably adamantane.

A further particularly preferred embodiment of the invention relates to a composition which comprises, consists essentially of, or consists of 8 to 12 wt.% of said (i) one or more substituted diamondoids, and 85 to 92 wt.% of said (ii) solvent A ethanol, based on the total weight of the composition. Within the context of this embodiment, said (i) one or more substituted diamondoids is most preferably 2-adamantanone. Within the context of this embodiment, said (ii) solvent A is preferably ethanol and/or isopropanol, most preferably ethanol.

### Definitions

Within the context of the present application, the term "substituted diamondoid" is to be understood to be a diamondoid in which one or more of the carbon atoms of the diamondoid polycyclic alkane cage is substituted with a substituent other than a hydrogen atom. Examples of "substituted diamondoids" include compounds such as 2-adamantanone, 1-adamantane carboxylic acid, 1-adamantylamine, 1-chloroadamantane, 2-adamantanol, 2-adamantanone, 2-methyl-2-adamantanol, 3-noradamantane carboxylic acid, 5-hydroxy-2-adamantanone and salts of any thereof.

Within the context of the present application, the term "unsubstituted diamondoid" is to be understood to be a diamondoid in which none of the carbon atoms of the diamondoid polycyclic alkane cage is substituted with a substituent other than a hydrogen atom. Examples of "unsubstituted diamondoids" include compounds such as adamantane, noradamantane, homoadamantane, iceane, BC-8, diamantane, triamantane, isotetramantane, pentamantane, cyclohexamantane and super-adamantane.

Within the context of the present application, "methyladamantanes" are compounds in which at least one of the carbon atoms of the adamantane polycyclic alkane cage is substituted with a methyl group.

Within the context of the present application, "perfluoromethyladamantanes" are compounds in which one of the carbon atoms of the adamantane polycyclic alkane cage is substituted with a trifluoromethyl group and all remaining possible positions of substitution on the polycyclic alkane cage are substituted with fluorine atoms (i.e. none of the carbon atoms of the adamantane polycyclic alkane cage is substituted with a hydrogen atom).

Within the context of the present application, "perfluorodimethyladamantanes" are compounds in which two positions of substitution (either two different carbon atoms or two positions of substitution on the same carbon atom) of the adamantane polycyclic alkane cage are substituted with a trifluoromethyl group and all remaining possible positions of substitution on the polycyclic alkane cage are substituted with fluorine atoms (i.e. none of the carbon atoms of the adamantane polycyclic alkane cage is substituted with a hydrogen atom).

Within the context of the present application, "perfluorotrimethyladamantanes" are compounds in which three positions of substitution of the adamantane polycyclic alkane cage are substituted with a trifluoromethyl group and all remaining possible positions of substitution on the polycyclic alkane cage are substituted with fluorine atoms (i.e. none of the carbon atoms of the adamantane polycyclic alkane cage is substituted with a hydrogen atom).

Within the context of the present application, "carboxylic acids of adamantane" are compounds in which at least one position of substitution of the adamantane polycyclic alkane cage is substituted with a carboxylic acid group.

Within the context of the present application, "adamantanols" are compounds in which at least one position of substitution of the adamantane polycyclic alkane cage is substituted with a hydroxyl group. Said term encompasses all structural isomers of monohydroxy-, dihydroxy-, trihydroxy- and tetrahydroxyadamantane.

Within the context of the present application, "adamantanediols" are compounds in which two positions of substitution (either two different carbon atoms or two positions of substitution on the same carbon atom) of the adamantane polycyclic alkane cage are substituted with a hydroxyl group.

Within the context of the present application, "ketones of adamantane" are compounds in which at least one suitable position of substitution of the adamantane polycyclic alkane cage is substituted with an oxygen atom via a double bond to form a ketone. The suitability of the position is determined by the ability of the carbon atom of the adamantane polycyclic alkane cage to form a double bond with oxygen. As such, only the carbon atoms of methylene (CH₂) groups of the adamantane polycyclic alkane cage atoms are suitable.

Within the context of the present application, "monoketones of adamantane" are compounds in which one suitable position of substitution of the adamantane polycyclic alkane cage is substituted with an oxygen atom via a double bond to form a ketone. The suitability of the position is determined by the ability of the carbon atom of the adamantane polycyclic alkane cage to form a double bond with oxygen. As such, only the methylene (CH₂) groups of the adamantane polycyclic alkane cage atoms are suitable.

Within the context of the present application, "amines of adamantane" are compounds in which at least one position of substitution of the adamantane polycyclic alkane cage is substituted with an amino group.

Within the context of the present application, "diamines of adamantane" are compounds in which two positions of substitution (either two different carbon atoms or two positions of substitution on the same carbon atom) of the adamantane polycyclic alkane cage are substituted with an amino group.

Within the context of the present application, the term "amino group" encompasses primary amino groups, secondary amino groups, tertiary amino groups and quaternary amino groups. Preferably, however, the term "amino group" encompasses only primary amino groups, secondary amino groups, and tertiary amino groups.

Within the context of the present application, a halogen substituent is defined to be a fluorine atom (-F), a chlorine atom (-Cl), a bromine atom (-Br), or a iodine atom (-I), and is preferably a fluorine atom or a chlorine atom.

Not each and every one of components (i) to (iv) constitutes an essential feature of the compositions of the present invention and the wording (or similar formulations) "the total weight of components (i) to (iv) present in the compositions of the present invention ... based on the total weight of the composition" is to be understood to simply refer to the total combined weight of whichever of components (i) to (iv) are actually present in a given composition, based on the total weight of the composition. For instance, in this context, if only components (i), (ii) and (iv) are present and component (iii) is not, the "the total weight of components (i) to (iv) present in the composition" will be equal to the total combined weight of components (i), (ii) and (iv). The same applies analogously in respect of, for example, the wording "based on the total weight of components (i) to (iv) present in the composition" or "based on the total weight of components (i) to (v) present in the composition" in which this is not to be understood to mean that each of components (i) to (iv) or (i) to (v) must be present but, rather, that it is based on the total combined weight of whichever of these components are actually present in a given composition.

In the compositions disclosed herein, where quantities are expressed in terms of weight percentage (wt.%) based on, for example, the total weight of components (i) to (iv) present in the composition, the total weight of components (i) to (v) present in the composition, the total weight of the composition, etc., the combined quantities expressed in wt.% of each of the individual components present in the composition based on for example, the total weight of components (i) to (iv) present in the composition, the total weight of components (i) to (v) present in the composition, the total weight of the composition, etc., cannot, of course, exceed 100 wt.%. For example, in a composition which comprises, consists essentially of, or consists of 6 to 8 wt.% of said (i) one or more substituted diamondoids, 15 to 20 wt.% of said (ii) solvent A, 4 to 6 wt.% of said (iii) solvent B, and 65 to 75 wt.% of a propellant, based on the total weight of the composition, although adding each of the upper limits recited would lead to a total of 8+20+6+75 = 109 wt.%, the actual quantities of the respective components present in a given composition are selected such that the total weight of the components does not exceed 100 wt.%. For example, one such composition may consist of 6 wt.% of said (i) one or more substituted diamondoids, 18 wt.% of said (ii) solvent A, 4 wt.% of said (iii) solvent B, and 72 wt.% of a propellant, based on the total weight of the composition.

Within the context of the present application, the terms "reversible" and "selfremovable" are to be understood to mean sublimable. Within the meaning of the present invention, a compound or material (e.g. a composition or coating) is sublimable if, particularly at a temperature of 20 to 50 °C (preferably 20 to 35 °C) at atmospheric pressure, it passes to some degree (i.e. even if only slowly) from the solid phase directly to the gas phase without passing through an intermediate liquid phase.

Within the context of the present application, "standard conditions" are equivalent to "normal temperature and pressure" which are defined as a temperature of 21±1 °C and an absolute pressure of 101.325 kPa (1 atm).

Unless specified otherwise herein, atmospheric pressure is to be understood to be 101.325 kPa.

Unless specified otherwise herein, room or ambient temperature is to be understood to be 21±1 °C.

Unless otherwise stated, all measurements and processes disclosed herein are to be understood to have been conducted under standard conditions.

Unless otherwise stated, all boiling point values referred to herein are to be understood to be boiling point values as measured at atmospheric pressure.

Unless stated otherwise, all weight percentage values (wt.%) specified herein are to be understood to refer to weight percentages relative to the total weight of the composition.

Within the context of the present application, "adamantane" refers to the compound known in the art as adamantane (C₁₀H₁₆) and not to any other adamantane-containing materials.

Within the context of the present application, the expression "essentially free" refers to the circumstance in which the species in respect of which the composition or material at hand is essentially free may nonetheless be present in minor quantities (for example, as impurities in other components present in the composition at hand - commercially available solvents may contain minor quantities of, for example, acetone or methylethylketone as unwanted impurities) which do not affect the desired properties taught herein to be associated with the compositions of the present technology. Essentially free in this context may thus mean that the species of which the composition or material in question is essentially free may be present in an amount of 1000 ppm or less, 750 ppm or less, 500 ppm or less, 300 ppm or less, 200 ppm or less, 100 ppm or less, 50 ppm or less, or 10 ppm or less.

The mention of any document herein is not an admission that such document or any of its contents belong to the general knowledge of the skilled person in any jurisdiction.

As used herein, the transitional term "comprising" which is synonymous with "including" or "containing" is inclusive or open-ended and does not exclude additional, unrecited elements or method steps. However, in each recitation of "comprising" herein, it is intended that the term also encompass and may thus be replaced, as alternative embodiments, by the term "consisting essentially of" or "consisting of", where "consisting of" excludes any element or step not explicitly specified and "consisting essentially of" permits the inclusion of additional unrecited elements or steps that do not materially affect the essential or basic characteristics of the composition or method under consideration.

Where a numerical range is disclosed herein, such range is continuous, inclusive of both the minimum and maximum values of the range as well as every value between such minimum and maximum values. Still further, where a range refers to integers, every integer between the minimum and maximum values of such range is included. In addition, where multiple ranges are provided to describe a feature or characteristic, such ranges can be combined. That is to say that, unless otherwise indicated, all ranges disclosed herein are to be understood to encompass any and all sub-ranges subsumed therein. For example, a stated range of from "1 to 10" should be considered to include any and all sub-ranges between the minimum value of 1 and the maximum value of 10 inclusive of the values 1 and 10. Exemplary sub-ranges of the range 1 to 10 include, but are not limited to, 1 to 6.1, 3.5 to 7.8, and 5.5 to 10. It is to be understood that the upper and lower amount, range, and ratio limits set forth herein may be independently combined. Similarly, each element or feature of the invention taught to be present in a given range or amount can be combined within a respective embodiment with the other elements of said embodiment, said other elements likewise being present in the ranges or amounts taught herein for said other elements. All ranges and amounts for one element of an embodiment can be combined with all ranges and amounts of the other elements in said embodiment. As such, ranges or values which are taught for one element or component of the invention, for example, to be preferred, more preferred or most preferred can be combined with any range or amount taught in respect of another element or component of said embodiment, irrespective of whether the range or amount taught in respect of the other element is referred to as being preferred, more preferred or most preferred etc (or simply disclosed without any such label or reference).

### Examples

Unless stated otherwise, all synthetic processes and parameter measurements are to be understood to have been conducted at room/ambient temperature, i.e. at 21±1 °C, and atmospheric pressure. Unless otherwise stated, all reagents are laboratory grade. All reagents used in the Mixtures and Examples described hereinbelow were purchased commercially under the stipulated product names. Orange Terpenes were purchased from Carl Roth GmbH & Co. KG.

The examples set forth hereinbelow serve merely to exemplify specific embodiments of the invention and in no way limit the scope of the invention as claimed and described elsewhere herein.

The following mixtures (Mixtures 1 to 3) according to the invention were produced by adding 2-adamantanone and, where present, adamantane, and orange terpenes in the amounts stated to the solvent(s) (ethanol and, where present, petroleum ether ("Spezialbenzin") 60/95, isopropanol, and/or cyclopentane) and mixing/stirring together at room temperature such to produce a solution. The resultant solutions were filtered through a high density filter (paper funnel with nylon insert, 125 µm; available from carparts GmbH, Cologne, Germany under the product name Car System Multi-Strain Farbsieb VE 125 µm; Product Number V146957-VE) to produce the final Mixtures 1 to 3.

| | **Mixture 1** | **Mixture 2** | **Mixture 3** |
|---|---|---|---|
| Petroleum Ether 60/95 (g) | 0 g | 255 g | 0 g |
| Isopropanol (g) | 0 g | 56.3 g | 0 g |
| Ethanol (g) | 40 g | 147.8 g | 450 g |
| Cyclopentane (g) | 12 g | 0 g | 0 g |
| 2-Adamantanone (g) | 16 g | 22.2 g | 54 g |
| Adamantane (g) | 0 g | 28.7 g | 0 g |
| Orange terpenes (g) | 0.1 g | 0 g | 0 g |

### Example 1

Using standard industry equipment and techniques for filling aerosol cans (cans filled at Pamasol-Swiss-Aerosol-Solutions, Switzerland), Mixture 1 was transferred via pump into industry standard 400 mL aerosol cans (65 mm diameter, 157 mm tall, 400 mL fill volume, 520 mL brim volume, 15 bar, straight wall cans available from G. Staehle GmbH u. Co. KG, Germany). The cans were then weighed to ascertain the quantity of Mixture 1 contained therein before the valve was fitted to the can, crimped and sealed following standard procedures. The cans were then pressurized with liquid propellant (butane:propane:isobutane, 74:23:3) and the final weight of the can measured in order to determine the quantity of propellant present. Finally, the can was fitted with a spray head ("Sprühkopf") (nozzle diameter 0.51 (+/-0.02) mm; available from Deutsche Präzisions-Ventil GmbH, Germany) present for activating the valve and thus releasing the composition upon depression. The final composition of Example 1 consisted of 40 g ethanol, 12 g cyclopentane, 16 g 2-adamantanone, 0.1 g orange terpenes and 160 g of propellant.

### Example 2

Using standard industry equipment and techniques, Mixture 2 was transferred into a plastic container (1 L bulk bottle) capable of being fitted with an airbrush for subsequent application of the mixture to the object to be coated. The final composition of Example 2 consisted of 255 g petroleum ether 60/95, 56.3 g isopropanol, 147.8 g ethanol, 22.2 g 2-adamantanone and 28.7 g adamantane.

### Example 3

Using standard industry equipment and techniques, Mixture 3 was transferred into a plastic container (1 L bulk bottle) capable of being fitted with an airbrush for subsequent application of the mixture to the object to be coated. The final composition of Example 3 consisted of 450 g ethanol and 54 g 2-adamantanone.

### Comparative Examples

In light of the problem underlying the present invention, the examples of the present invention were tested against a series of prior art, commercial and non-prior-art products.

Comparative Example 1 (in accordance with PCT/EP2019/080073) is a composition consisting of 22.9 g petroleum ether 40/65, 84.4 g cyclopentane, 38.1 g ethanol, 22.9 g adamantane and 81.7 g of propane. Said composition was prepared as a pressurised aerosol spray in a standard 400 mL spray can in analogous fashion to Example 1 above.

Comparative Example 2 is a commercially available aerosol cyclododecane spray available from the company Deffner and Johann GmbH, Germany under the product name "Cyclododecan Spray" (Product Number: 2062 400). According to available data this product contains from 25 to less than 50 weight percent cyclododecane, 25 to less than 50 weight percent propane, 25 to less than 50 weight percent butane, and 10 to less than 12.5 weight percent isobutene and comes as a pressurised aerosol spray in a standard 400 mL spray can.

Comparative Example 3 is a solution of 16 g cyclododecane in 24 g secondary butanol, 16 g n-pentane, 0.2 g orange terpenes and 168 g of propellant (butane:propane:isobutane, 74:23:3). Said composition was prepared in analogous fashion to the composition of Example 1 as a pressurised aerosol spray in a standard 400 mL spray can.

### Application of the Coating Layer

The compositions of each of Examples 1 to 3 and Comparative Examples 1 to 3 were applied to the test substrate (a clean, solid sheet of polished stainless steel) by manually applying a single, even coating layer from a distance of approximately 300 mm. In the case of Example 1 as well as Comparative Examples 1 to 3 this involved simply releasing the composition from the respective spray can by depressing the spray head (thus opening the valve) and applying the coating layer to the polished stainless steel sheet as described above. In the case of Example 2, the composition did not comprise a propellant and thus an airbrush (Tectake HVLP Lackierpistole, available from Tectake GmbH, with air pressure 1.5 barg and 0.8 nozzle diameter) was used to project the composition onto the test substrate. In the case of Example 3, the composition did not comprise a propellant and thus an airbrush (SATAgraph4, available from SATA GmbH & Co. KG, with air pressure 1 barg and 0.3 nozzle diameter) was used to project the composition onto the test substrate.

Subsequent to the application step, half of the coating was removed by scratching. Said step was performed by means of a sharp razor blade in order to obtain a clear edge between the coated and uncoated regions of the substrate.

### Tests

Each of the respective coated stainless steel sheets was then tested for 1) whether the coating produced a surface that could be scanned ("scannability"), 2) the quality of the coating surface produced in terms of 2a) surface smoothness and 2b) surface homogeneity, 3) the thickness of the coating 4) mar resistance, 5) the ability of reference dots/spots to adhere to the coating, 6) the ability of the dots/points to be removed without negatively affecting surface quality, 7) the ability of the dots/points to re-adhere following removal, 8) coating residence time, 9) coating formation on an oiled surface, 10) coating durability against running water, and 11) odour. Each of said properties was measured according to the following test procedures:

### 1) Scannability

In this test, the ability of the coated surface to enable the scanner to produce a 3D scan of the test object was evaluated. The scanner used was a ATOS Triple Scan 16M Plus 29M/SO mounted inside a scanbox 5120 available from the manufacturer GOM and the scan was performed following the instructions and workflow set forth by the scanner manufacturer in the software provided with the scanner (ATOS Professional 2018, Hotfix 1, Rev. 111729, build 2018-08-22). In this context, the scanner was initially calibrated prior to conducting any scan measurements. The calibration scans were conducted following the calibration protocol set forth in the aforementioned software, the calibration sensor being an ATOS Triple Scan 16 M Plus 29M/SO sensor with a measurement volume ("Messvolumen") MV170 (170 mm x 130 mm x 130 mm). The calibration object was a calibration plate (Triple Scan; CP40-170-41739s). The number of calibration points was 3657 and the calibration temperature was 23.2 °C. The following calibration settings applied: camera lens - 50.00 mm, focal length (projector) - 60.00 mm, recording mode - multi-record ("Mehrfachaufnahme"), elipse quality - 0.4.

The coated objects to be scanned (polished stainless steel sheet) were prepared as described above and the scanner positioned directly in front of the particular sheet to be measured. By aligning the focal point of the scanner such that it coincide with the centre of the sheet to be scanned, it was ensured that the sheet was positioned exactly in the centre of the scanner's measurement volume.

A scan was then performed on the respective sheet by following the protocol set forth in the above-mentioned scanner software. Following the successful capture of a scan, the scanner was repositioned at a different angle such to cover a new area of the sheet's surface. A further scan was then performed. This procedure was repeated until the entire surface of the sheet had been scanned. The scanner software was employed to process the scan data and report the scan results including the data regarding the homogeneity of the coated surfaces as described hereinbelow.

A result of "yes" in the table below means that it was possible for the scanner to produce a 3D-scan of the coated object. A result of "barely" in the table below means that less than 50% of the surface could be scanned.

### 2) Surface Quality

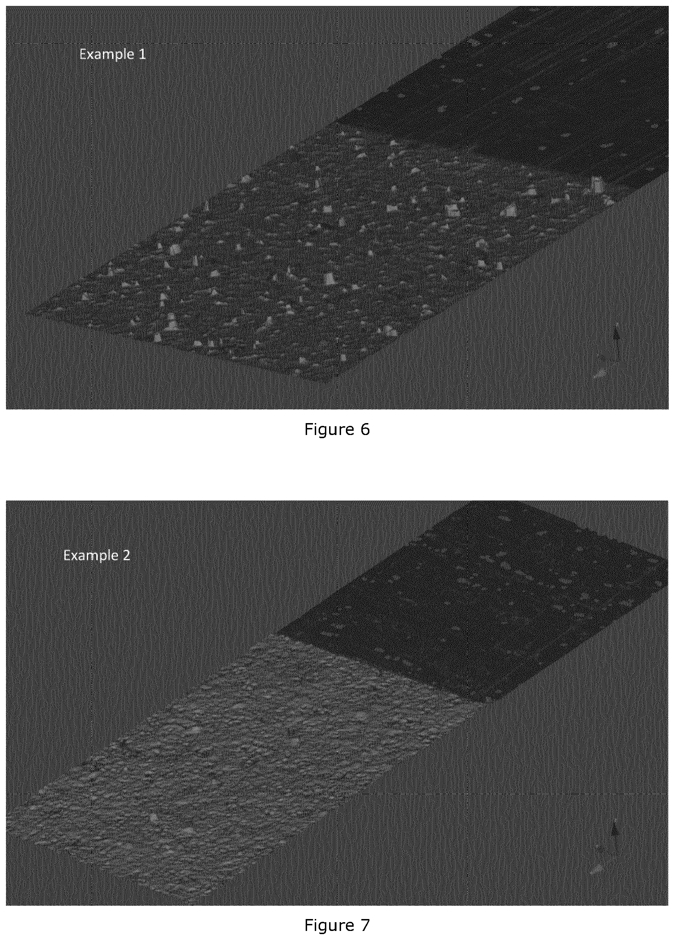

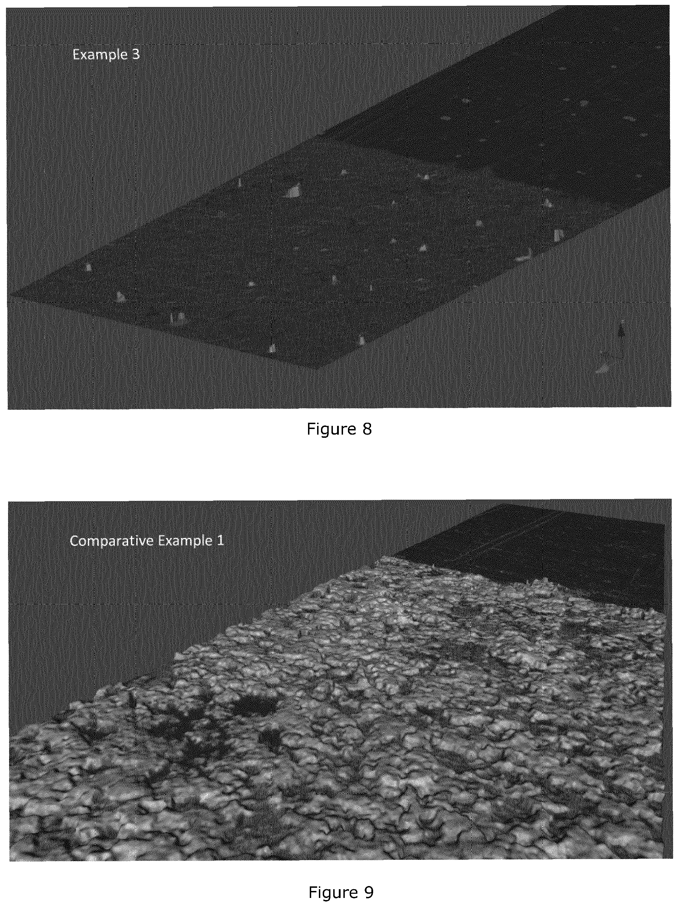

The quality of the coating surface is reflected through its 2a) smoothness and 2b) homogeneity. The coating thickness (see 3) below), smoothness and homogeneity were determined using an Alicona G5 surface characterisation device (available from Alicona Imaging GmbH, Germany; Product ID: A201015018, Alicona IF-frame SN: 076201502516, Alicona IF-SensorC100 Instrument G1Vb4 SN: 074201502516, Alicona IF-C100 ElectronicsUnit Va2 SN: 081027011915; Software - MeasureSuite 5.3.1) and that of each Example is reported in the table below. The surface homogeneity was evaluated on the basis of said scan measurements produced by the scanner and depicted in the visual representations of the coating surface generated by the scanner software (MeasureSuite 5.3.1). Such visual representations of the coating surfaces of each of the Examples are depicted in Figures 6 to 8 (Examples 1 to 3) and 9 to 11 (Comparative Examples 1 to 3) and summarized in the table below. A score of 1 (excellent quality) to 5 (very poor quality) was accorded on the basis of the degree of homogeneity observed. Likewise, a score of 1 (excellent smoothness) to 5 (very poor smoothness) was accorded on the basis of the degree of smoothness observed.

### 3) Coating Thickness

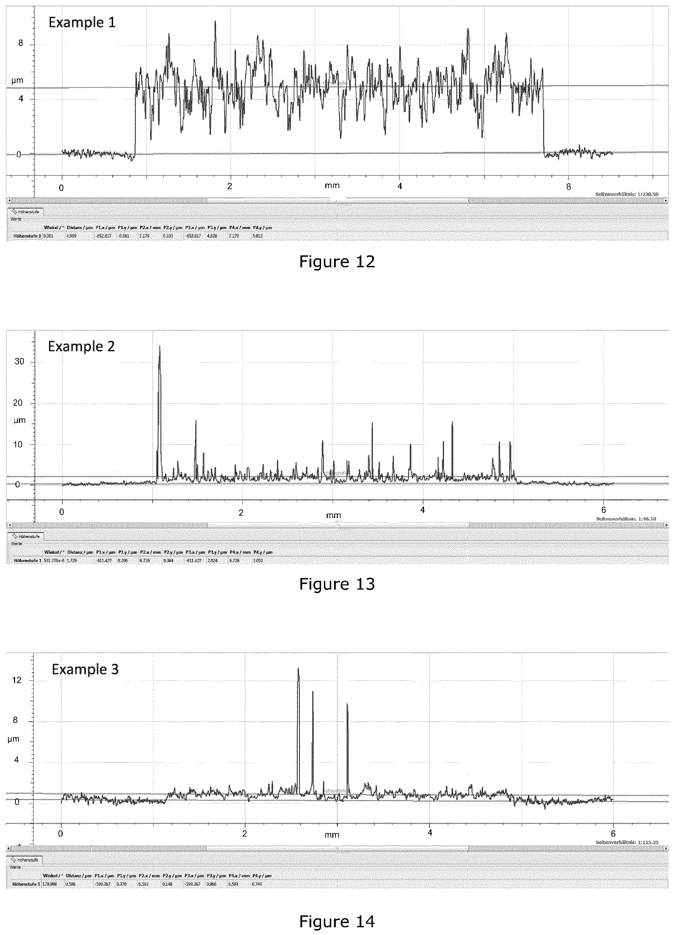

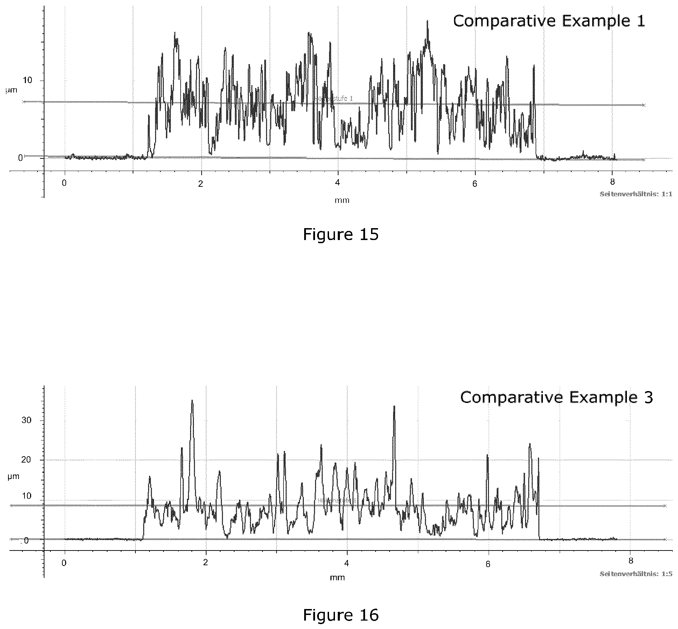

The coating thickness was determined by following the procedure outlined under 2) above. The surface thickness was evaluated on the basis of the scan measurements produced by the scanner. Such visual representations of the coating thickness of each of the Examples are depicted in Figures 12 to 16 and the average thickness of each of the Examples and Comparative Examples is summarized in the table below.

### 4) Mar Resistance

Stainless steel sheets coated with the respective compositions of Examples 1 to 3 and Comparative Examples 1 to 3 were produced as described above and placed on a flat surface. Each sheet was then raised from the flat surface by grasping the sheet between the fingers of one hand and held for a period of 5 seconds. The sheets were then returned to the flat surface and released from the hand. Each sheet was then visually inspected and accorded a "score" from 1 to 5 based on the marring of the surface coating which had resulted relative to its original post-spraying state.

Scores: 1 = no smudging of coating upon handling and no re-treatment required prior to scanning; 3 = some degree of smudging upon handling but coating layer remains to some degree intact; 5 = coating immediately smudged/removed and surface quality lost upon handling.

### 5) Adhesion of Reference Dots/Spots

A coating of each of the respective compositions was applied to a polished stainless steel sheet as described above. Following application of the composition and allowing to dry to form the desired coating, the reference dots were applied to the coated surface. The applied dots were then observed over a period of 30 minutes and their initial ability to adhere/initial quality of adhesion to the coated surface and any change in the degree of adhesion over time was noted.

Score: 1=dots adhere very well to coated surface and remain adhered until active removal; 2=dots adhere well to coated surface; 3=dots show average adhesion to coated surface; 4= dots exhibit minimal degree of adhesion to coated surface and detach after a short time without further interference; 5 = dots do not adhere at all to coated surface.

### 6) Effect of Dot/Spot Removal on Surface Quality

Reference dots were applied to the surface of the coated polished stainless steel sheets as described under test 5) above. The dots were then manually removed by hand being careful not to disturb the surface coating through hand contact. The area of the surface of the coating from which the reference dot had been removed was then visually inspected and accorded a "score" of 1 to 5 to reflect the quality of the remaining coating.

Scores:1=no noticeable deterioration in quality of coated surface; 5 = quality of coated surface noticeably impaired upon removal of dot.

### 7) Ability of Dots/Spots to Re-adhere

The procedure of reference dot application and removal was performed in accordance with tests 5) and 6) above. The removed dots were then reapplied to the coated surface from which they had been removed and tested for their adherence in accordance with the procedure outlined for test 5) above.

Scores: 1 =following reapplication, dots adhere very well to coated surface and remain adhered until active removal; 2=following reapplication, dots adhere well to coated surface; 3=following reapplication, dots show average adhesion to coated surface; 4=following reapplication, dots exhibit minimal degree of adhesion to coated surface and detach after a short time without further interference; 5=following reapplication, dots do not adhere at all to coated surface.

### 8) Residence Time

Following coating of the polished stainless steel sheets with the respective compositions as outlined above, the time during which sufficient coating remained on the surface to allow a successful scan measurement to be performed following the above-described scanning procedure was determined. The results for each composition are listed in the table below. In this regard, a result of "short" corresponds to a residence time of below 60 minutes, a result of "medium" to a residence time of from 60 minutes to 24 hours or less and a result "long" to a residence time exceeding 24 hours.

### 9) Coating Formation on an Oiled Surface

To a metal (steel) gear wheel exhibiting a protective coating layer of lubricating oil was applied a coating of the respective compositions in the manner described above for the polished stainless steel sheets and a scan measurement attempted following the protocol outlined above for test 1).

In the Table below, a result of "good" means that a coating of sufficiently quality to produce a high quality scan was produced and that the coating subsequently sublimed to leave the underlying protective oil layer intact. A result of "medium" means that a coating of sufficiently quality to produce a high quality scan was produced but, following sublimation of the coating, the underlying protective oil layer was no longer perfectly intact and had to be reapplied. A result of "poor" means that it was not possible to form a coating of sufficient quality to produce a high quality scan.

### 10) Coating Durability against Running Water

Polished stainless steel sheets coated with each of the respective compositions were produced as described above. The coated sheets were then held under a running cold water tap such that water ran over the coated surface for a period of 10 seconds. The sheet was then removed from the flow path of the water and allowed to air dry for a period of 20 seconds. The coated surface was then visually evaluated in order to determine whether the coating had been impaired or not.

Scores: yes=durable against running water; no=not durable against running water.

### 11) Odour

The odour of the compositions was assessed on the basis of a smell test. In a well-aired room and at standard conditions the compositions were briefly applied to the surface of polished stainless steel sheets, smelled and evaluated. The odour was scored by scanning application engineers, who are all experienced in using such "scanning sprays" on a regular basis. The average score was then calculated and reported as follows:
Scores: 1=pleasant odour; 2=little to no odour; 3=unpleasant odour.

| | **Ex 1** | **Ex 2** | **Ex 3** | **Comp Ex 1** | **Comp Ex 2** | **Comp Ex 3** |
|---|---|---|---|---|---|---|
| 1) Scannable | yes | yes | yes | yes | barely | yes |
| 2a) Surface smoothness | 1 | 2 | 1 | 2 | 6 | 2 |
| 2b) Surface Homogeneity | 1 | 2 | 1 | 2 | 6 | 2 |
| 3) Coating Thickness (µm) | 5 | 2 | 0.6 | 7 | >25 | 9 |
| 4) Mar Resistance | 1 | 1 | 1 | 1 | 5 | 2 |
| 5) Dot Adhesion | 1 | 1 | 1 | 1 | 5 | 2 |
| 6) Effect of Dot Removal | 1 | 1 | 1 | 1 | 2 | 5 |
| 7) Re-Adhesion of Dots | 1 | 1 | 1 | 1 | 3 | 5 |
| 8) Residence Time | long | medium | long | short | long | medium |
| 9) Ability to form a high quality coating on an oiled surface | good | good | good | good | good | poor |
| 10) Durability against running water | yes | yes | yes | yes | yes | yes |
| 11) Odour | 1 | 1 | 1 | 2 | 3 | 3 |

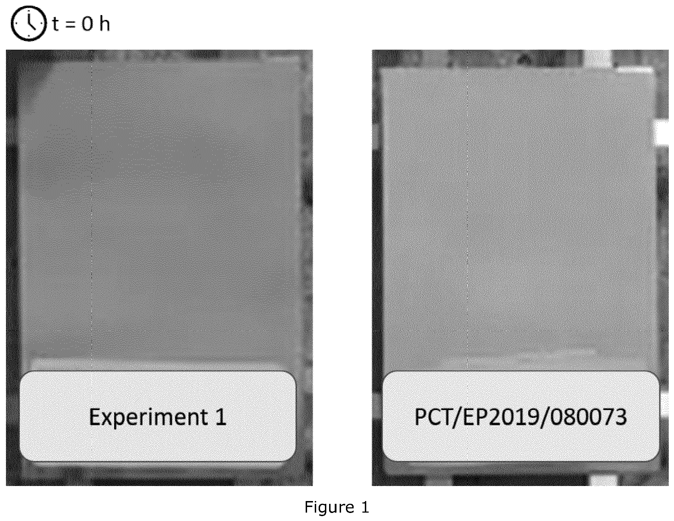

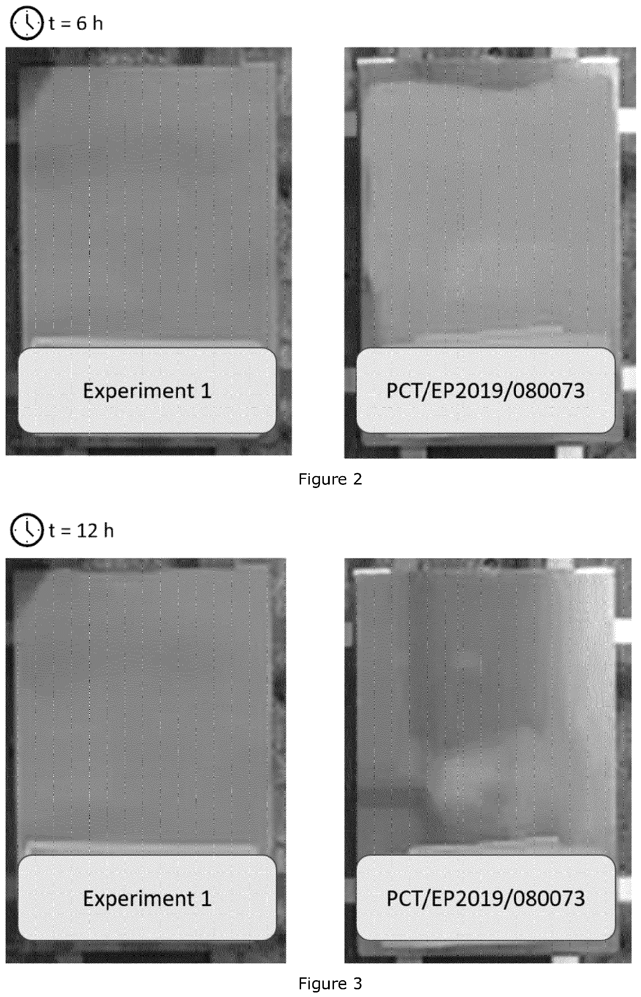

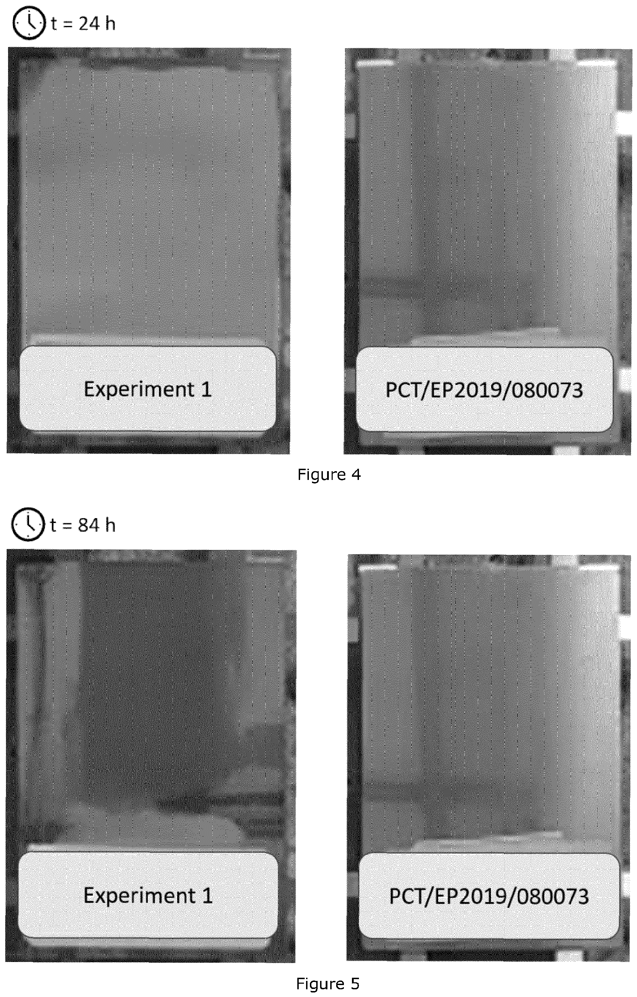

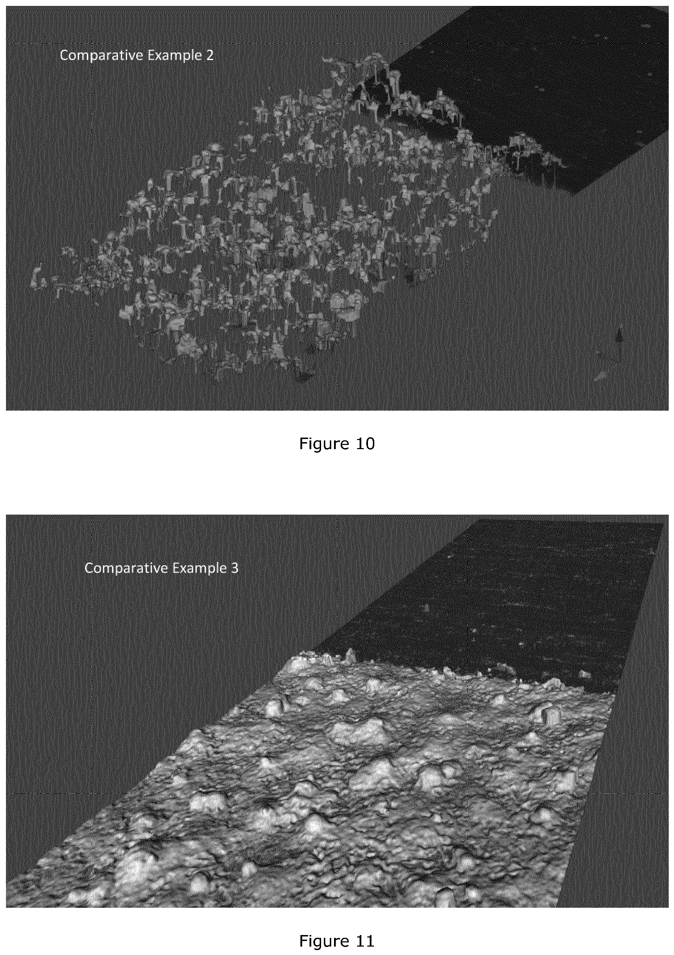

Each of Figures 1 to 5 shows the progress of the sublimation of a coating of Example 1 versus a coating of Comparative Example 1 over time, said coatings having been applied to sheets of polished stainless steel as described hereinabove. Figures 6 to 16 were generated by the above-described scanner software and show, inter alia, the surface quality including smoothness, homogeneity and thickness achieved upon coating stainless steel sheets with the respective compositions of Examples 1 to 3 and Comparative Examples 1 to 3 following the coating application procedure outlined above. From Figures 6 to 11, the improved surface smoothness and homogeneity of the coatings generated using the compositions of the invention (Examples 1 to 3) relative to those generated using the compositions of Comparative Examples 1 to 3 can be seen. Figures 12 to 16 show the thickness profile along a defined path starting on an area without coating, continuing on the coated area and ending, again, on an area without coating. The x-axis in each of Figures 12 to 16 represents the distance from the starting point to the end point of this path. Along this path, the coating thickness is measured and depicted on the y-axis in each of Figures 12 to 16. In addition to the x-axis, each of these figures shows two further horizontal lines, which are parallel to the x-axis. The lower of these lines represents 0 µm thickness. The upper of these lines represents the average thickness. The average thicknesses are reported in the above table.

## Claims

1. A composition comprising
(i) one or more substituted diamondoids;
and
(ii) a solvent A
and/or
(iii) a solvent B;
wherein said (i) one or more substituted diamondoids comprises one or more ketones of adamantane.

2. The composition according to claim 1, wherein the composition further comprises:
(iv) one or more unsubstituted diamondoids.

3. The composition according to any one of the preceding claims, wherein each substituent in said (i) one or more substituted diamondoids is independently selected from the group consisting of -R¹, -CF₃, -COOH, -CHO, -C(O)R¹, -CO₂R¹, -OH, -OR¹, -NH₂, -NHR¹, -NR¹R² wherein R¹ and R² are selected independently from each other, -halogen, =O, =NH, =NR¹, =NOR¹, and =NOH, wherein R¹ is methyl or C₂-C₆ alkyl and R² is methyl or C₂-C₆ alkyl.

4. The composition according to any one of the preceding claims, wherein independently from each other, each of said (i) one or more substituted diamondoids has from one to three substituents.

5. The composition according to any one of the preceding claims, wherein the composition further comprises cyclododecane.

6. The composition according to any one of the preceding claims, wherein said (i) one or more substituted diamondoids comprises 2-adamantanone.

7. The composition according to any of the preceding claims, wherein said (ii) solvent A does not comprise a hydrocarbon.

8. The composition according to any of the preceding claims, wherein said (ii) solvent A is selected from the group consisting of one or more alcohols; one or more C₄-C₆(cyclo)alkyl ethers, such as diethyl ether or tetrahydrofuran; one or more C₃-C₈ ketones, such as methyl ethyl ketone or acetone; one or more C₃-C₈ esters, such as methyl acetate or ethyl acetate; and any combination of any thereof.

9. The composition according to any of the preceding claims, wherein said (iii) solvent B is a hydrocarbon or a mixture of hydrocarbons.

10. The composition according to any one of claims 2 to 9, wherein said (iv) one or more unsubstituted diamondoids is selected from the group consisting of adamantane, noradamantane, homoadamantane, iceane, BC-8, diamantane, triamantane, isotetramantane, pentamantane, cyclohexamantane, super-adamantane, and any combination of any thereof; preferably from the group consisting of adamantane, noradamantane, homoadamantane, and any combination of any thereof.

11. The composition according to any of the preceding claims, wherein said composition further comprises a propellant.

12. An object comprising a coating formed by the application of the composition of any of the preceding claims to a surface thereof.

13. A method of manufacturing the composition according to any of claims 1 to 11, comprising the step of mixing together each of the components present in the composition.

14. A method of conducting an optical measurement of the surface of an object, said method comprising the steps of:
(a) applying the composition according to any one of claims 1 to 11 to a surface of an object to be optically measured;
(b) conducting an optical measurement of the surface of the object to which the composition has been applied.

15. Use of the composition of any of claims 1 to 11 for forming a coating on the surface of an object, in particular in order to prepare the surface of said object for an optical measurement.

## Patentansprüche

1. Zusammensetzung, umfassend:
(i) ein oder mehrere substituierte Diamantoide;
und
(ii) ein Lösungsmittel A
und/oder
(iii) ein Lösungsmittel B;
wobei das (i) eine oder die mehreren substituierten Diamantoide ein oder mehrere Ketone von Adamantan umfassen.

2. Zusammensetzung gemäß Anspruch 1, wobei die Zusammensetzung weiterhin umfasst:
(iv) ein oder mehrere unsubstituierte Diamantoide.

3. Zusammensetzung gemäß einem der vorstehenden Ansprüche, wobei jeder Substituent in dem (i) einen oder den mehreren substituierten Diamantoiden unabhängig aus der Gruppe ausgewählt ist, die aus -R¹, -CF₃, -COOH, -CHO, -C(O)R¹, -CO₂R¹, -OH, -OR¹, -NH₂, -NHR¹, -NR¹R², wobei R¹ und R² unabhängig voneinander ausgewählt sind, -Halogen, =O, =NH, =NR¹, =NOR¹ und =NOH besteht, wobei R¹ Methyl oder C₂-C₆-Alkyl ist und R² Methyl oder C₂-C₆-Alkyl ist.

4. Zusammensetzung gemäß einem der vorstehenden Ansprüche, wobei jedes des (i) einen oder der mehreren substituierten Diamantoide unabhängig voneinander einen bis drei Substituenten aufweist.

5. Zusammensetzung gemäß einem der vorstehenden Ansprüche, wobei die Zusammensetzung weiterhin Cyclododecan umfasst.

6. Zusammensetzung gemäß einem der vorstehenden Ansprüche, wobei das (i) eine oder die mehreren substituierten Diamantoide 2-Adamantanon umfasst.

7. Zusammensetzung gemäß einem der vorstehenden Ansprüche, wobei das (ii) Lösungsmittel A keinen Kohlenwasserstoff umfasst.

8. Zusammensetzung gemäß einem der vorstehenden Ansprüche, wobei das (ii) Lösungsmittel A aus der Gruppe ausgewählt ist, die aus einem oder mehreren Alkoholen, einem oder mehreren C₄-C₆(Cyclo)alkylethern, wie Diethylether oder Tetrahydrofuran, einem oder mehreren C₃-C₈-Ketonen, wie Methylethylketon oder Aceton, einem oder mehreren C₃-C₈-Estern, wie Methylacetat oder Ethylacetat, und jeder Kombination von beliebigen davon besteht.

9. Zusammensetzung gemäß einem der vorstehenden Ansprüche, wobei das (iii) Lösungsmittel B ein Kohlenwasserstoff oder ein Gemisch von Kohlenwasserstoffen ist.

10. Zusammensetzung gemäß einem der Ansprüche 2 bis 9, wobei das (iv) eine oder die mehreren unsubstituierten Diamantoide ausgewählt sind aus der Gruppe, die aus Adamantan, Noradamantan, Homoadamantan, Icean, BC-8, Diamantan, Triamantan, Isotetramantan, Pentamantan, Cyclohexamantan, Superadamantan und jeder Kombination von beliebigen davon besteht, vorzugsweise aus der Gruppe, die aus Adamantan, Noradamantan, Homoadamantan und jeder Kombination von beliebigen davon besteht.

11. Zusammensetzung gemäß einem der vorstehenden Ansprüche, wobei die Zusammensetzung weiterhin ein Treibmittel umfasst.

12. Gegenstand, der eine Beschichtung umfasst, die durch die Auftragung der Zusammensetzung gemäß einem der vorstehenden Ansprüche auf eine seiner Oberflächen gebildet ist.

13. Verfahren zur Herstellung der Zusammensetzung gemäß einem der Ansprüche 1 bis 11, umfassend den Schritt des Miteinandermischens aller in der Zusammensetzung vorhandenen Komponenten.

14. Verfahren zur Durchführung einer optischen Messung der Oberfläche eines Gegenstands, wobei das Verfahren die folgenden Schritte umfasst:
(a) Auftragen der Zusammensetzung gemäß einem der Ansprüche 1 bis 11 auf eine Oberfläche eines Gegenstands, die optisch gemessen werden soll;
(b) Durchführen einer optischen Messung der Oberfläche des Gegenstands, auf den die Zusammensetzung aufgetragen wurde.

15. Verwendung der Zusammensetzung gemäß einem der Ansprüche 1 bis 11 zur Bildung einer Beschichtung auf der Oberfläche eines Gegenstands, insbesondere um die Oberfläche des Gegenstands für eine optische Messung vorzubereiten.

## Revendications

1. Composition comprenant
(i) un ou plusieurs diamandoïdes substitués ;
et
(ii) un solvant A
et/ou
(iii) un solvant B ;
dans laquelle lesdits (i) un ou plusieurs diamandoïdes substitués comprennent une ou plusieurs cétones d'adamantane.

2. Composition selon la revendication 1, dans laquelle la composition comprend en outre :
(iv) un ou plusieurs diamandoïdes non substitués.

3. Composition selon l'une quelconque des revendications précédentes, dans laquelle chaque substituant dans lesdits (i) un ou plusieurs diamandoïdes substitués est indépendamment choisi dans le groupe constitué de -R¹, -CF₃, -COOH, -CHO, -C(O)R¹, -CO₂R¹, -OH, -OR¹, -NH₂, -NHR¹, -NR¹R² dans laquelle R¹ et R² sont choisis indépendamment l'un de l'autre, -halogène, =O, =NH, =NR¹, =NOR¹ et =NOH, dans laquelle R¹ est un méthyle ou un alkyle en C₂-C₆ et R² est un méthyle ou un alkyle en C₂-C₆.

4. Composition selon l'une quelconque des revendications précédentes, dans laquelle indépendamment les uns des autres, chacun desdits (i) un ou plusieurs diamandoïdes substitués présente de un à trois substituants.

5. Composition selon l'une quelconque des revendications précédentes, dans laquelle ladite composition comprend en outre du cyclododécane.

6. Composition selon l'une quelconque des revendications précédentes, dans laquelle lesdits (i) un ou plusieurs diamandoïdes substitués comprennent de la 2-adamantanone.

7. Composition selon l'une quelconque des revendications précédentes, dans laquelle ledit (ii) solvant A ne comprend pas d'hydrocarbure.

8. Composition selon l'une quelconque des revendications précédentes, dans laquelle ledit (ii) solvant A est choisi dans le groupe constitué d'un ou plusieurs alcools ; d'un ou plusieurs éthers de (cyclo)alkyle en C₄-C₆, tels que l'éther diéthylique ou le tétrahydrofurane ; d'une ou plusieurs cétones en C₃-C₈, telles que la méthyl éthyl cétone ou l'acétone ; d'un ou plusieurs esters en C₃-C₈, tels que l'acétate de méthyle ou l'acétate d'éthyle ; et de toute combinaison de quelconques de ceux-ci.

9. Composition selon l'une quelconque des revendications précédentes, dans laquelle ledit (iii) solvant B est un hydrocarbure ou un mélange d'hydrocarbures.

10. Composition selon l'une quelconque des revendications 2 à 9, dans laquelle lesdits (iv) un ou plusieurs diamandoïdes non substitués sont choisis dans le groupe constitué de l'adamantane, du noradamantane, de l'homoadamantane, de l'icéane, de BC-8, du diamantane, du triamantane, de l'isotétramantane, du pentamantane, du cyclohexamantane, du super-adamantane, et de toute combinaison de quelconques de ceux-ci ; de préférence dans le groupe constitué de l'adamantane, du noradamantane, de l'homoadamantane, et de toute combinaison de quelconques de ceux-ci.

11. Composition selon l'une quelconque des revendications précédentes, dans laquelle ladite composition comprend en outre un agent propulseur.

12. Objet comprenant un revêtement formé par l'application de la composition selon l'une quelconque des revendications précédentes sur une surface de celui-ci.

13. Procédé de fabrication de la composition selon l'une quelconque des revendications 1 à 11, comprenant l'étape de mélange de chacun des composants présents dans la composition.

14. Procédé de réalisation d'une mesure optique de la surface d'un objet, ledit procédé comprenant les étapes de :
(a) application de la composition selon l'une quelconque des revendications 1 à 11 sur une surface d'un objet devant être mesuré optiquement ;
(b) réalisation d'une mesure optique de la surface de l'objet sur lequel la composition a été appliquée.

15. Utilisation de la composition selon l'une quelconque des revendications 1 à 11 pour former un revêtement sur la surface d'un objet, en particulier afin de préparer la surface dudit objet pour une mesure optique.
